(19) Europäisches Patentamt
European Patent Office
Office européen des brevets

(11) EP 1 263 856 B1

(12) **EUROPÄISCHE PATENTSCHRIFT**

(45) Veröffentlichungstag und Bekanntmachung des Hinweises auf die Patenterteilung:
**24.06.2009 Patentblatt 2009/26**

(21) Anmeldenummer: **01905714.0**

(22) Anmeldetag: **31.01.2001**

(51) Int Cl.:
***C08K 5/00*** *(2006.01)* ***C08K 5/3435*** *(2006.01)*
***C08K 3/00*** *(2006.01)* ***C08K 5/16*** *(2006.01)*

(86) Internationale Anmeldenummer:
**PCT/EP2001/001012**

(87) Internationale Veröffentlichungsnummer:
**WO 2001/057122 (09.08.2001 Gazette 2001/32)**

(54) **STABILISATORZUSAMMENSETZUNG**

STABILIZER COMPOSITION

COMPOSITION DE STABILISATEUR

(84) Benannte Vertragsstaaten:
**CH DE FR GB LI**

(30) Priorität: **01.02.2000 DE 10004158**

(43) Veröffentlichungstag der Anmeldung:
**11.12.2002 Patentblatt 2002/50**

(73) Patentinhaber: **BASF SE**
**67056 Ludwigshafen (DE)**

(72) Erfinder:
- **SUTORIS, Heinz-Friedrich**
**67551 Worms (DE)**
- **HAREMZA, Sylke**
**69151 Neckargemünd (DE)**
- **TRAUTH, Hubert**
**67373 Dudenhofen (DE)**
- **HOFMANN, Erik**
**67258 He heim (DE)**
- **APPEL, Manfred**
**76829 Landau (DE)**

(74) Vertreter: **Kinzebach, Werner et al**
**Reitstötter, Kinzebach & Partner**
**Patentanwälte**
**Ludwigsplatz 4**
**67059 Ludwigshafen (DE)**

(56) Entgegenhaltungen:
**EP-A- 0 421 933** **EP-A- 0 911 362**
**DE-A- 19 651 307**

- **DATABASE CHEMABS [Online] CHEMICAL ABSTRACTS SERVICE, COLUMBUS, OHIO, US; NAKANE, IZUMI ET AL: "Colored polyolefin compositions with excellent colorfastness to chlorine-containing water" retrieved from STN Database accession no. 123:200713 XP002167915 & JP 07 076639 A (TOYO INK MFG CO, JAPAN) 20. März 1995 (1995-03-20)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 263 856 B1

## Beschreibung

Die vorliegende Erfindung betrifft eine Stabilisatorzusammensetzung sowie deren Verwendung zur Stabilisierung von unbelebtem organischen Material gegen die Einwirkung von Licht, Sauerstoff und Wärme.

Die mechanischen, chemischen und/oder ästhetischen Eigenschaften von unbelebtem organischen Material, insbesondere Kunststoffen und Lacken, werden bekanntermaßen durch die Einwirkung von Licht, Sauerstoff und Wärme verschlechtert. Diese Verschlechterung zeigt sich üblicherweise als Vergilbung, Verfärbung, Rissbildung oder Versprödung des Materials. Mit Stabilisatoren oder Stabilisatorzusammensetzungen soll ein zufriedenstellender Schutz gegen die Beeinträchtigung von organischem Material durch Licht, Sauerstoff und Wärme erzielt werden.

Die EP-A 0 723 990 offenbart ein synergistisches Stabilisatorgemisch, das z. B. die folgenden Komponenten enthält:

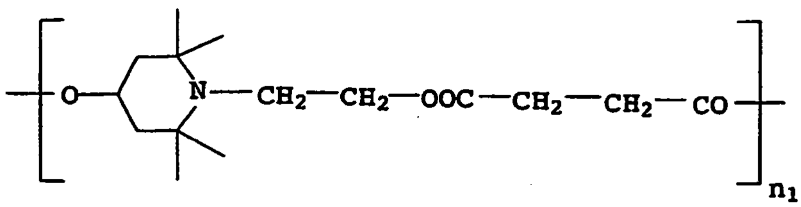

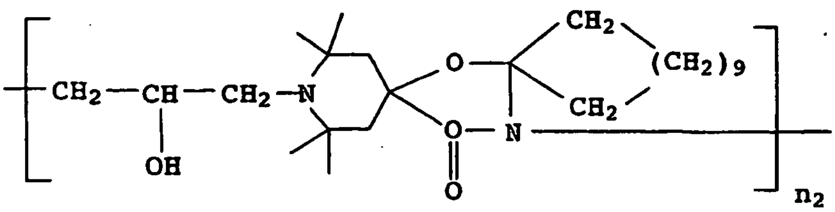

Die DE-OS 44 04 144 offenbart Piperidin-Triazin-Verbindungen z. B. der folgenden Formel als Lichtstabilisatoren, Wärmestabilisatoren und Antioxidantien für organische Materialien:

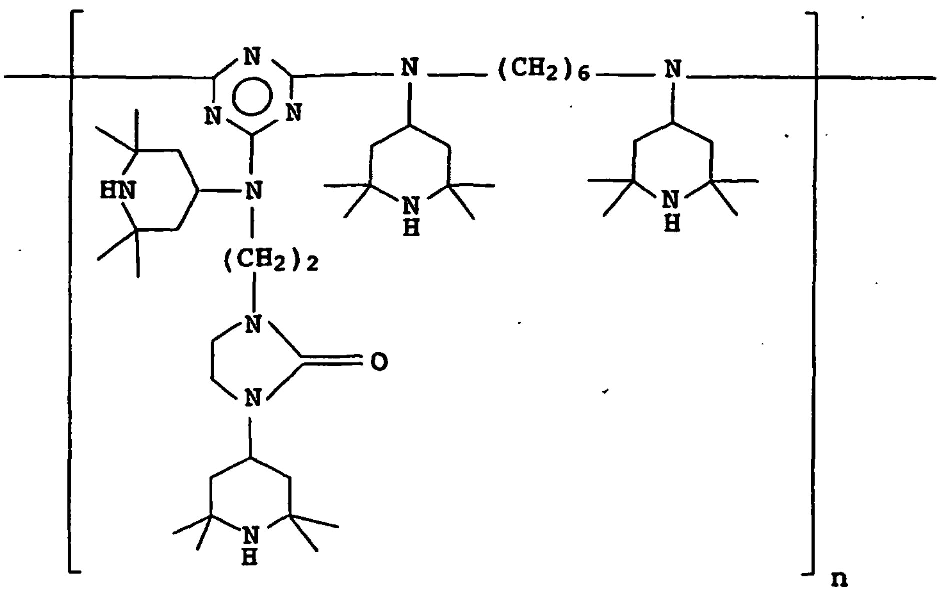

Die DE-OS 37 38 736 offenbart bestimmte 4-Formylaminopiperidinderivate, z. B.:

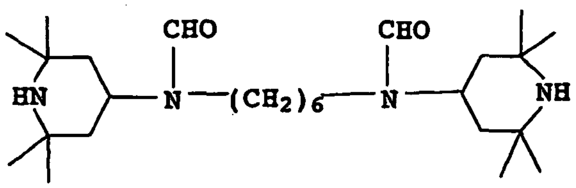

,

die stabilisierende Eigenschaften in Kunststoffen aufweisen.

Verbindungen der vorgenannten Art, die sekundäre Aminfunktionen aufweisen, in denen alle Substituenten in $\alpha$-Position zum Amin-Stickstoffatom von Wasserstoff verschieden sind, werden oft als sterisch gehinderte Aminstabilisatoren bzw. HALS (Hindered Amine Light Stabilizers) bezeichnet.

Es hat sich gezeigt, dass eine weitere Verbesserung der Schutzwirkung der bekannten Stabilisatoren bzw. Stabilisatorzusammensetzungen wünschenswert ist. Der vorliegenden Erfindung liegt daher die Aufgabe zugrunde, eine neue Stabilisatorzusammensetzung mit hoher Schutzwirkung gegen die Einwirkung von Licht, Sauerstoff und Wärme anzugeben.

Es wurde nun gefunden, dass die Schutzwirkung sterisch gehinderter Aminstabilisatoren durch Zusatz geringer Mengen einer Eisenverbindung erheblich gesteigert werden kann.

Gegenstand der Erfindung ist demzufolge eine Stabilisatorzusammensetzung, die enthält:

A) wenigstens eine Stickstoffverbindung wie in Anspruch 1 definiert, und
B) wenigstens eine Eisenverbindung

in einer Menge von 1 Gew.-ppm bis 5 Gew.-%, bezogen auf die Stickstoffverbindung

stickstoffverbindungen der Komponente A) der erfindungsgemäßen Stabilisatorzusammensetzung sind, allgemeine Formel:

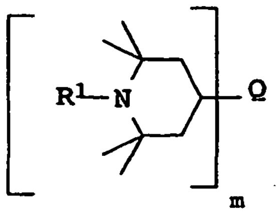

worin

$R^1$ für H, $C_1$-$C_8$-Alkyl, $CH_2CN$, OH, $C_1$-$C_9$-Alkoxy, $C_3$-$C_6$-Alkenyl oder $C_1$-$C_8$-Acyl, vorzugsweise für H, steht,
Q für einen m-wertigen, über O, N oder C gebundenen organischen Rest mit einem Molekulargewicht von $\geq$ 15, vorzugsweise $\geq$ 30, insbesondere 45 bis 5 000, meist 45 bis 2 000 oder bis 400, steht und
m für eine ganze Zahl von 1 bis 100, vorzugsweise 2 bis 30, steht.

In der obigen Formel ist Q vorzugsweise ausgewählt unter

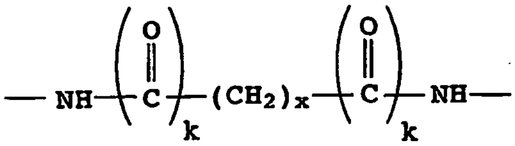

,

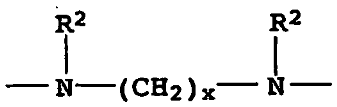,

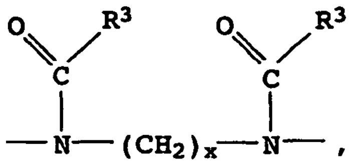,

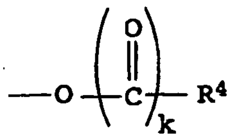,

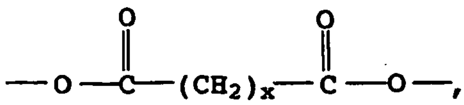,

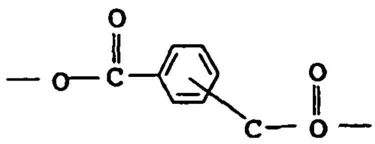,

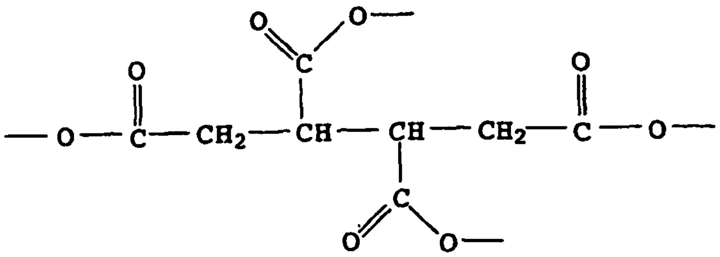,

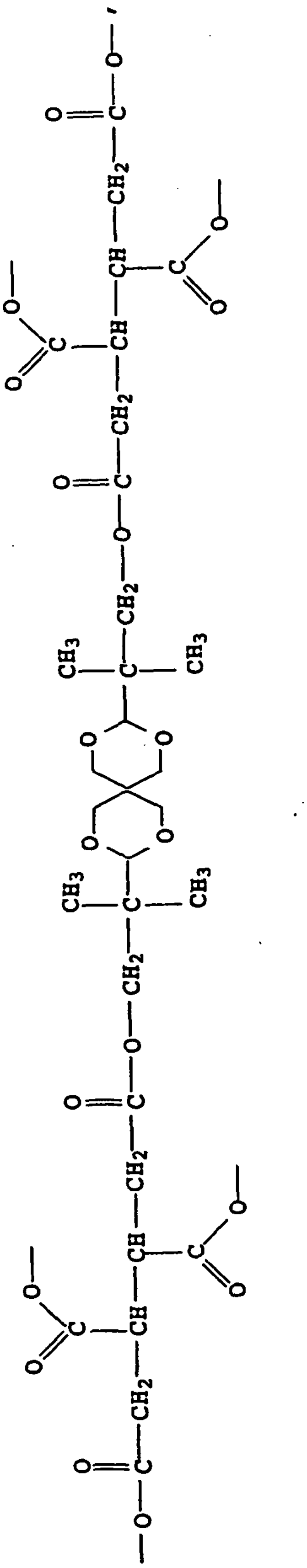

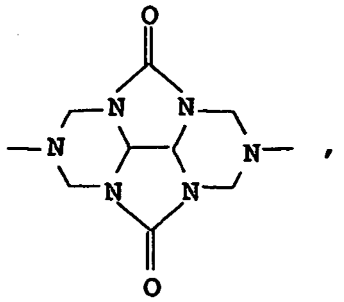

,

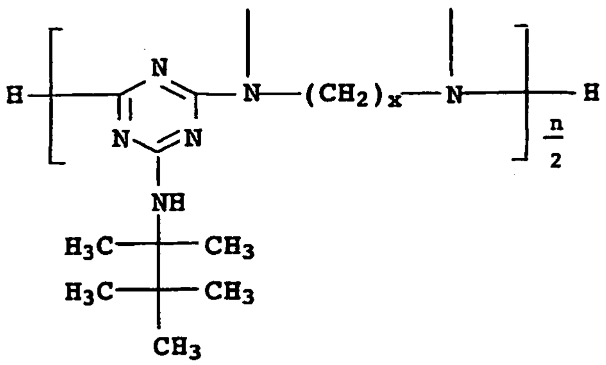

,

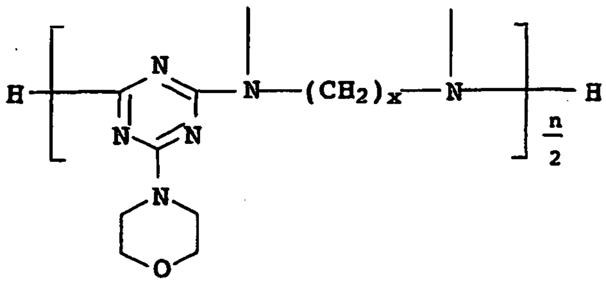

,

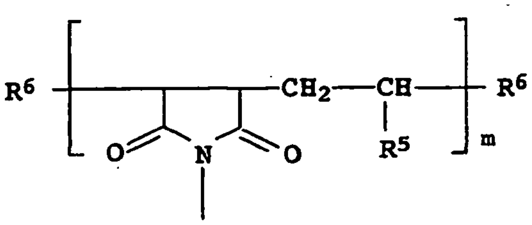

,

wobei

$R^2$ $C_1$-$C_{12}$-Alkyl oder $-(CH_2)_z-COOR^7$

$R^3$ Wasserstoff oder $C_1$-$C_{18}$-Alkyl,

$R^4$ $C_1$-$C_{18}$-Alkyl, Vinyl, Isopropenyl oder Phenyl, das einen, zwei oder drei unter $C_1$-$C_4$-Alkyl ausgewählte Substituenten tragen kann,

$R^5$ $C_8$-$C_{22}$-Alkyl,

$R^6$ Wasserstoff oder den Rest eines radikalischen Polymerisa tionsinitiators,

$R^7$ $C_1$-$C_{18}$-Alkyl,

k 0 oder 1,

x, z unabhängig voneinander 1 bis 12 und

n eine gerade Zahl m

bedeuten.

Besonders bevorzugte sekundäre Amine, die als Komponente A) der erfindungsgemäßen Stabilisatorzusammensetzung geeignet sind, sind:

2,2,6,6-Tetramethylpiperidin-4-yl-acetat,
2,2,6,6-Tetramethylpiperidin-4-yl-2-ethylhexanoat,
2,2,6,6-Tetramethylpiperidin-4-yl-stearat,
2,2,6,6-Tetramethylpiperidin-4-yl-hexadecanoat,
2,2,6,6-Tetramethylpiperidin-4-yl-benzoat,
2,2,6,6-Tetramethylpiperidin-4-yl-(4-tert-butyl)benzoat,
Bis(2,2,6,6-tetramethylpiperidin-4-yl)succinat,
Bis(2,2,6,6-tetramethylpiperidin-4-yl)adipat,
Bis(2,2,6,6-tetramethylpiperidin-4-yl)sebacat,
Bis(2,2,6,6-tetramethylpiperidin-4-yl)phthalat,
Bis(2,2,6,6-tetramethylpiperidin-4-yl)isophthalat,
Bis(2,2,6,6-tetramethylpiperidin-4-yl)terephthalat,
N,N-Bis(2,2,6,6-tetramethylpiperidin-4-yl)adipinamid,
N,N-Bis(2,2,6,6-tetramethylpiperidin-4-yl)-N,N-bisformyl-1,6-diaminohexan,
Bis(1,2,2,6,6-pentamethylpiperidin-4-yl)sebacat,
Bis(1-octyloxy-2,2,6,6-tetramethylpiperidin-4-yl)sebacat,
Bis(1,2,2,6,6-pentamethylpiperidin-4-yl)-n-butyl-3,5-di-tert-butyl-4-hydroxybenzylmalonat,
das Kondensationsprodukt aus 1-(2-Hydroxyethyl)-2,2,6,6-tetramethyl-4-hydroxypiperidin und Bernsteinsäure,
das Kondensationsprodukt aus N,N'-Bis(2,2,6,6-tetramethylpiperidin-4-yl)hexamethylendiamin und 4-Tert-octylamino-2,6-dichloro-1,3,5-triazin,
Tris(2,2,6,6-tetramethylpiperidin-4-yl)nitrilotriacetat,
Tetrakis(2,2,6,6-tetramethylpiperidin-4-yl)-1,2,3,4-butan-tetracarboxylat,
1,1'-(1,2-Ethylen)-bis(3,3,5,5-tetramethylpiperazinon),
Bis(1,2,2,6,6-pentamethylpiperidin-4-yl)-2-n-butyl-2-(2-hydroxy-3,5-di-tert-butylbenzyl)malonat,
3-n-Octyl-7,7,9,9-tetramethyl-1,3,8-triazaspiro[4.5]decan-2,4-dion,
Bis(1-octyloxy-2,2,6,6-tetramethylpiperidin-4-yl)sebacat,
Bis(1-octyloxy-2,2,6,6-tetramethylpiperidin-4-yl)succinat,
das Kondensationsprodukt aus N,N'-Bis(2,2,6,6-tetramethylpiperidin-4-yl)hexamethylendiamin und 4-Morpholino-2,6-dichloro-1,3,5-triazin,
das Kondensationsprodukt aus 2-Chloro-4,6-bis(4-n-butylamino-2,2,6,6-tetramethylpiperidin-4-yl)-1,3,5-triazin und 1,2-Bis(3-aminopropylamino)ethan,
das Kondensationsprodukt aus 2-Chloro-4,6-di(4-n-butylamino-1,2,2,6,6-pentamethylpiperidin-4-yl)-1,3,5-triazin und 1,2-Bis-(3-aminopropylamino)ethan,
8-Acetyl-3-dodecyl-7,7,9,9-tetramethyl-1,3,8-triazaspiro[4.5]-decan-2,4-dion,
3-Dodecyl-1-(2,2,6,6-tetramethylpiperidin-4-yl)pyrrolidin-2,5-dion,
das Kondensatonsprodukt aus N,N'-Bis-(2,2,6,6-tetramethylpiperidin-4-yl)-hexamethylendiamin und 4-Cyclohexylamino-2,6-dichloro-1,3,5-triazin,
4-Butylamino-2,2,6,6-tetramethylpiperidin,
N-(2,2,6,6-Tetramethylpiperidin-4-yl)-n-dodecylsuccinimid,
N-(1,2,2,6,6-Pentamethylpiperidin-4-yl)-n-dodecylsuccinimid,
2-Undecyl-7,7,9,9-tetramethyl-1-oxa-3,8-diaza-4-oxospiro[4.5]-decan,
das Kondensationsprodukt aus 7,7,9,9-Tetramethyl-2-cycloundecyl-1-oxa-3,8-diaza-4-oxospiro-[4.5]decan und

Epichlorhydrin,
die Kondensationsprodukte aus 4-Amino-2,2,6,6-tetramethylpiperidin mit Tetramethylolacetylendiharnstoffen und Poly(methoxypropyl-3-oxy)-[4(2,2,6,6-tetramethyl)piperidinyl]siloxan, und
alternierende N-(2,2,6,6-Tetramethyl-4-piperidinyl)maleinsäureimid-$C_{20}$-$C_{24}$-α-Olefin-Copolymerisate. Letztere sind besonders bevorzugt.

Die als Komponente B) der erfindungsgemäßen Stabilisatorzusammensetzung geeignete Eisenverbindung ist vorzugsweise ausgewählt unter

a) metallorganischen Eisencarbonylverbindungen,
b) unsubstituierten und substituierten Ferrocen-Verbindungen
c) Eisenkomplexe mit Liganden, in welchen das Eisenatom über Sauerstoff, Stickstoff, Schwefel und/oder Phosphor koordinativ gebunden ist,
d) Eisenhalogenid- und Eisenpseudohalogenid-Verbindungen.

Metallorganische Eisencarbonylverbindungen der Gruppe a) sind beispielsweise Verbindungen der Formel

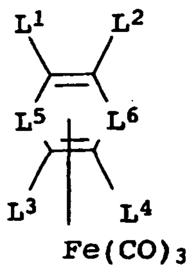

oder

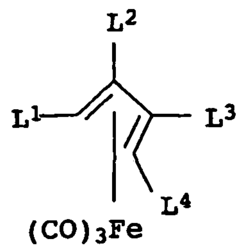

wobei die Variablen bedeuten

$L^1$ - $L^4$ Wasserstoff, $C_1$-$C_4$-Alkyle wie Methyl, Ethyl, Propyl oder t-Butyl

$L^5$, $L^6$ $-(CH_2)_n-$ oder -CO-, wobei für die Variablen $L^5$ und $L^6$ n unabhängig voneinander 0, 1, 2 oder 3 bedeutet.

Exemplarisch seien hier genannt die Fe-Verbindungen

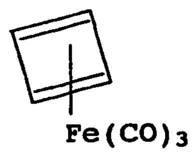
,
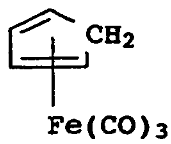
,
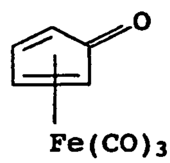
,
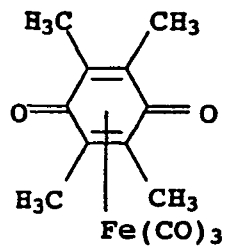

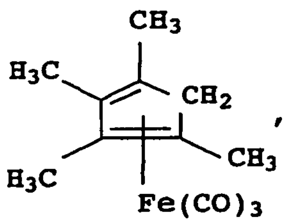
,
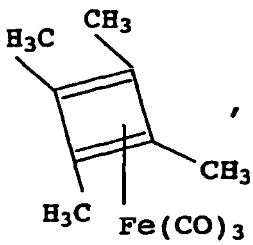
,
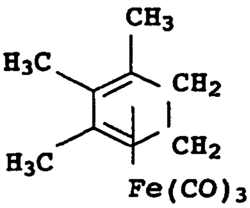
,
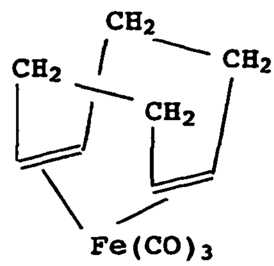

sowie

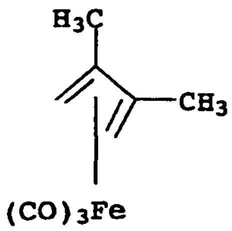 , 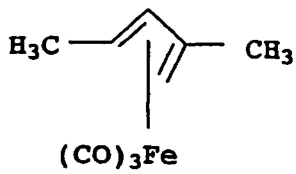 , 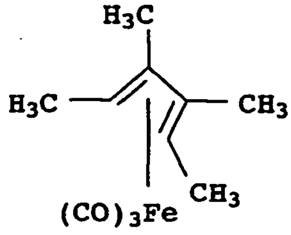

Weiter können aus dieser Gruppe erfindungsgemäß auch zweikernige Fe-Verbindungen, wie

$[H_5C_5Fe(CO)_2]_2$, $[(H_3C)_5C_5Fe(CO)_2]_2$ sowie die sich daraus ableitenden Ferrate $M[Fe(CO)_2C_5H_5]$ und $M[Fe(CO)_2(H_3C)_5C_5)$ verwendet werden, worin M für ein Äquivalent eines Alkali- oder Erdalkalimetalls, vorzugsweise Natrium, steht.

Zu den erfindungsgemäß einzusetzenden Verbindungen der Gruppe b) zählen das Ferrocen selbst sowie die an einem oder beiden Cyclopentadienylringen substituierten Derivate. Weiter können auch dimere Ferrocenderivate eingesetzt werden. Die Verknüpfung der einzelnen Ferroceneinheiten erfolgt dabei über je ein C-Atom des Cyclopentadienylringes durch eine chemische Bindung oder eine Methylen-, Ethylen-, Propylen-, Butylen- oder Phenylphosphin-Brücke.

Als Substituenten der Cyclopentadienylringe kommen in Frage $C_1$-$C_4$-Alkenylreste, $C_7$-$C_{10}$-Aroyl, $C_1$-$C_4$-Alkylreste, wie Methyl, Ethyl, n-Propyl, i-Propyl, n-Butyl, i-Butyl, sec.-Butyl oder t-Butyl. Weiter können in diesen Substituenten ein oder zwei $CH_2$-oder $CH_3$-Gruppen ersetzt sein durch O, NH, $NCH_3$ oder OH, $NH_2$. Die Bindung dieser Heteroatome oder heteroatomhaltigen Fragmente erfolgt dabei zu C-Atomen. Es können weiterhin auch ein oder zwei $CH_2$-Gruppen durch CO oder ein oder zwei $CH_3$-Gruppen durch CN ersetzt sein. Daneben können auch, gegebenenfalls neben den bereits erwähnten Gruppen, Diphenylphosphinreste als Substituenten an den Cyclopentadienylringen fungieren.

Beispiele für erfindungsgemäß einzusetzende Ferrocenderivate sind

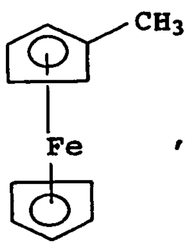 , 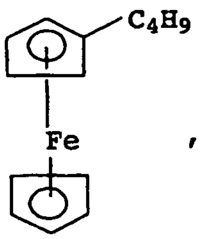 , 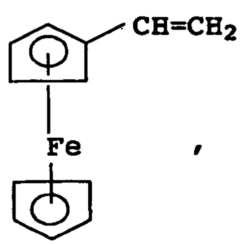 , 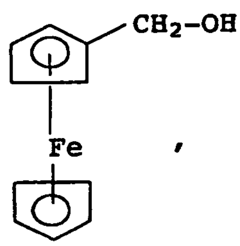 ,

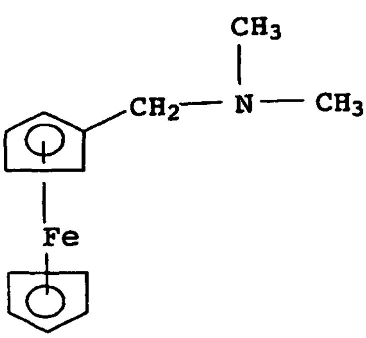 , 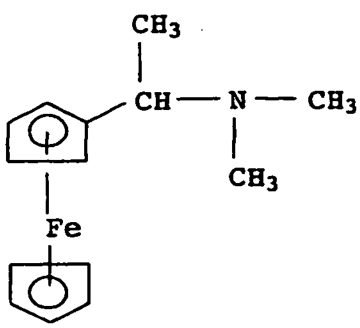 ,

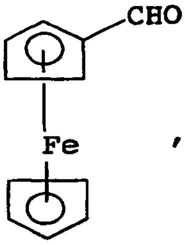 , 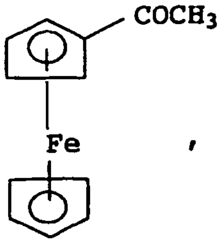 , 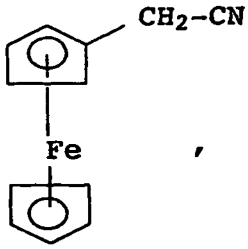 , 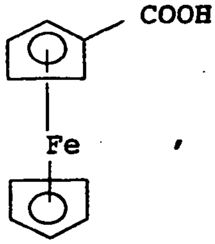 ,

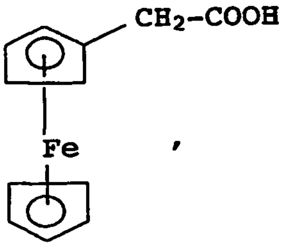 , 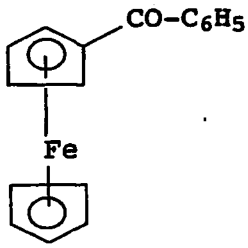 ,

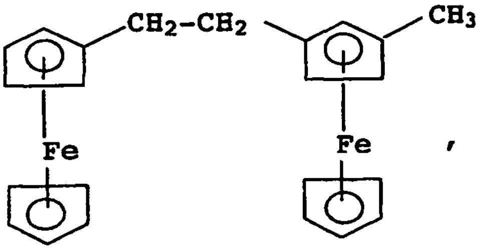 , 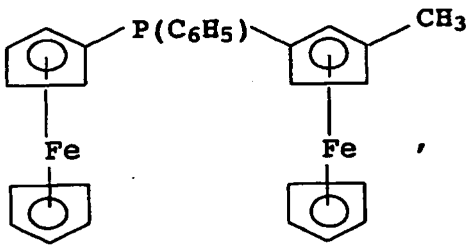 ,

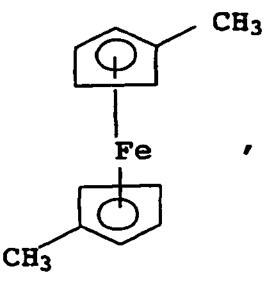 , 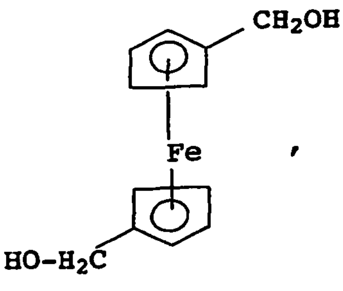 , 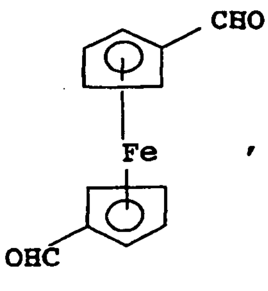 ,

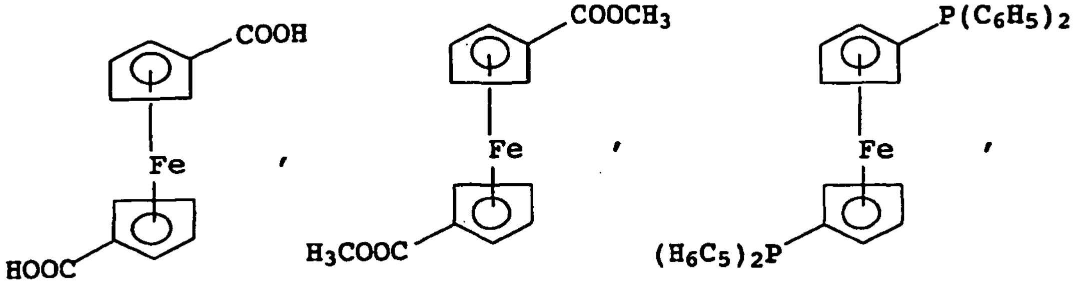

, , ,

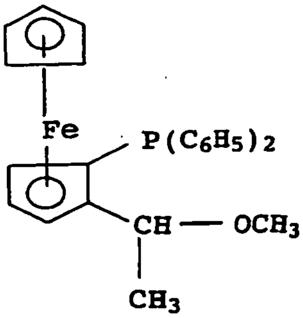

,

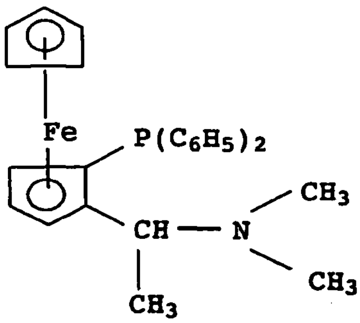

,

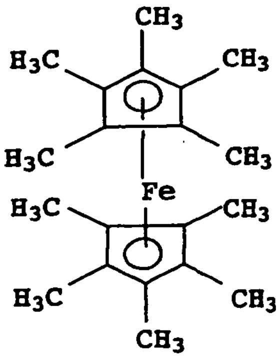

.

Als Verbindungen der Gruppe c) werden Eisenkomplexe mit Liganden, vorzugsweise mehrzähnigen, z. B. 2-, 3- oder 4-zähnigen, Liganden eingesetzt, in welchen das Eisenatom über Sauerstoff, Stickstoff, Schwefel und/oder Phosphor koordinativ gebunden ist. Hierzu zählen Komplexe oder Salze des Fe(II)/Fe(HI) mit O-haltigen Liganden, wie Sulfat, Acetat, Oxalat, Citrat, Tartrat, Lactat, Gluconat oder Acetylacetonat (acac), d. h. Verbindungen, wie

$[Fe_3O(SO_4)_6(OH)_3]^{3\ominus}$, $[Fe_3O(O_2CCH_3)_6(OH_2)_3]^{\oplus}$,

$[Fe_3O(O_4C_2)_6(OH_2)_3]5^{\ominus}$, $[Fe(C_4H_4O_6)_2]^{2\ominus/\ominus}$, $Fe(C_4H_4O_6)$,

$Fe_2(C_4H_4O_6)_3$, $Fe(C_3H_5O_3)_2$, $Fe(C_6H_{11}O_7)_2$, $[Fe(C_2O_4)_3]3^{\ominus}$,

$FeC_2O_4$, $[Fe(C_2O_4)_2]^{2\ominus}$, $Fe(acac)_3$, $Fe(acac)_2$, $Fe(C_6H_6O_7)$,

$Fe(C_6H_5O_7)$.

Weitere ausschließlich oder überwiegend O-haltige Liganden für Fe(II) oder Fe(III) können aber auch mehrfache

cyclische Ether, wie Sphäranden, Cryptanden, Cryptasphäranden, Hemisphäranden, Coronanden oder offenkettige Vertreter dieser Ether sowie Podanden sein. Eine Beschreibung solcher Liganden, welche zusammen mit Fe(II) oder Fe(III) zur Bereitstellung der erfindungsgemäß einzusetzenden Fe-Verbindungen verwendet werden können, findet man in der Literatur, z. B. C.J. Pedersen, H.K. Frensdorff, "Makrocyclische Polyether und ihre Komplexe", Angew. Chem. 84 (1), S. 16-26, 1972; G. Gokel, "Crown Ethers & Cryptands", Publ. by Roy. Soc. Chem., Black Bear Press Cambridge, England, 1991; D.J. Cram, "Präorganisation - von Solventien zu Sphäranden", Angew. Chem. 98, S. 1041-1060, 1986; Phase Transfer Catalysts, Merck-Schuchardt Firmenschrift; G.W. Gokel, S.H. Korzeniowski, "Macrocyclic Polyether Synthesis", Springer Verlag Berlin, Heidelberg, New York, S. 55-151, 1982; US-Patentschrift 3 760 005, wobei jedoch arsenhaltige Liganden nicht zur Verwendung kommen sollen.

Weiter können verwendet werden Komplexe mit N-haltigen Chelat-Liganden wie Ethylendiamin (en), 1,10-Phenanthrolin (phen), 1,8-Naphthpyridin (napy), 2,2'-Bipyridin (bipy) und Dibenzo[b,i]-1,4,8,11-tetraaza-[14]annulen (taa), d. h. Verbindungen, wie

$[Fe(en)(H_2O)_4]^{2\oplus/3\oplus}$, $[Fe(en)_2(H_2O)_2]^{2\oplus/3\oplus}$,

$[Fe(en)_3]^{2\oplus/3\oplus}$, $[Fe(phen)_3]^{2\oplus/3\oplus}$, $[Fe(napy)_4]^{2\oplus/3\oplus}$,

$[Fe(bipy)_4]^{2\oplus/3\oplus}$ und

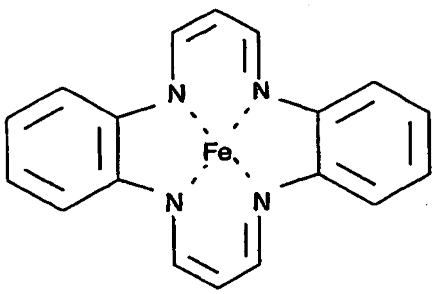

**(Fe(taa)),**

aber auch Komplexe des Eisens mit verschiedenen, substituierten Porphyrinliganden, wie sie aus der Literatur bekannt sind (beispielsweise B. Mennier, Chem. Rev., Vol 92 (8), S. 1411-1456, 1992). Andere verwendbare N-haltige Liganden sind das Phthalocyanin und Derivate davon.

Mit N,O-haltigen Liganden, wie Ethylendiamintetraessigsäure (EDTA) oder Nitrilotriessigsäure (NTA), ergeben sich Verbindungen, wie

$[Fe(EDTA)(H_2O)]^{\ominus/2\ominus}$, $[Fe(NTA)(H_2O)_2]$ bzw. $[Fe(NTA)(H_2O)_2]^{\ominus}$,

mit 8-Hydroxychinolin(chin) oder 5-Methyl-8-hydroxychinolin ($H_3C$-chin) Verbindungen, wie

$[Fe(chin)_3]/[Fe(chin)_3]^{2\ominus}$ bzw.

$[Fe(H_3C\text{-}chin)_3]/[Fe(H_3C\text{-}chin)_3]^{2\ominus}$,

welche sich ebenfalls verwenden lassen.

Weitere erfindungsgemäß einzusetzende Fe-Verbindungen mit N,O-haltigen Chelatliganden besitzen die folgenden Formeln

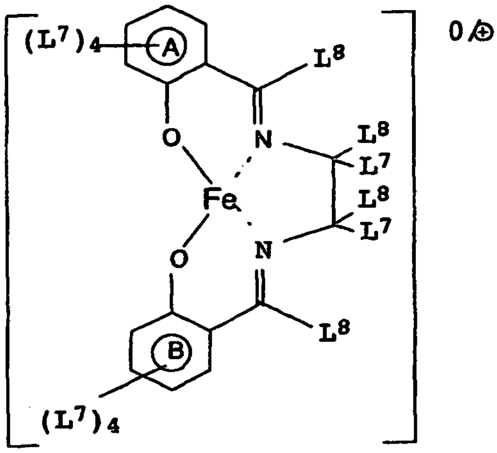

,

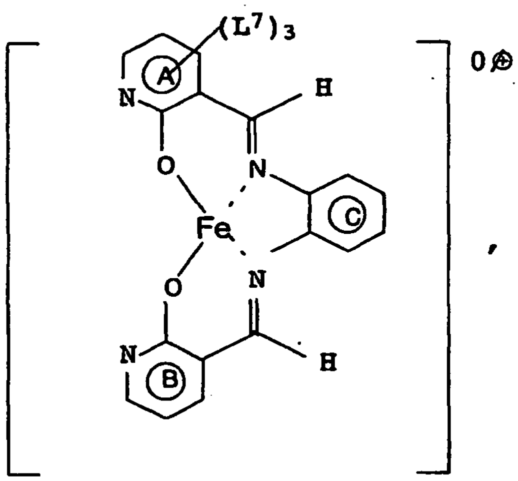

,

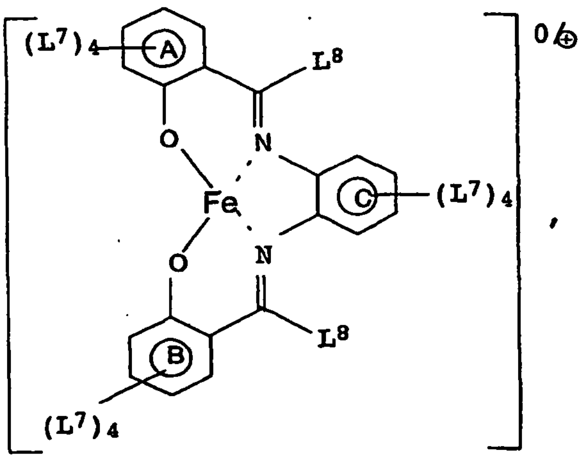

,

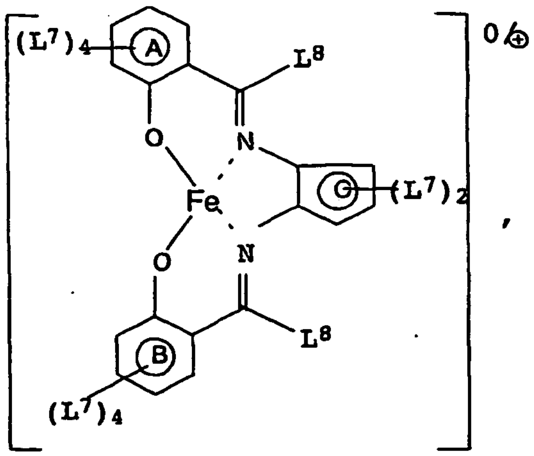

X = NH, O, S

,

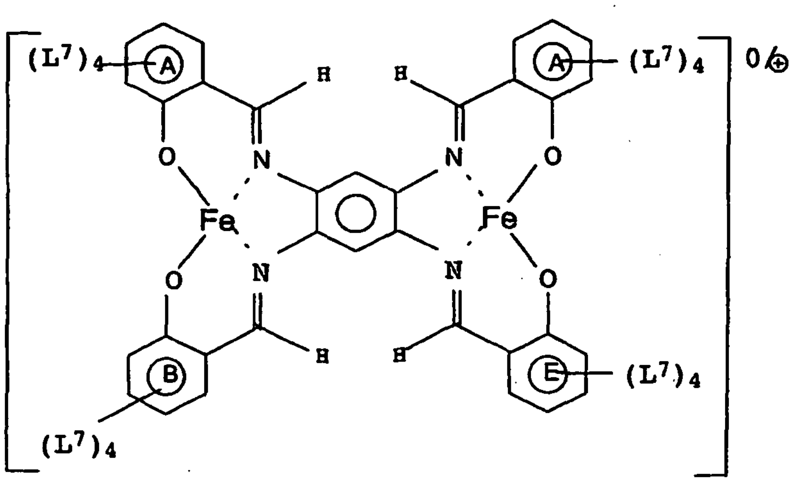

,

wobei die Reste $L^7$ Wasserstoff, Halogen, $SO_3H$, $SO_2NH_2$, $SO_2NH(C_1\text{-}C_{12}\text{-Alkyl})$, $SO_2N(C_1\text{-}C_{12}\text{-Alkyl})_2$, $CONH_2$, CONH

($C_1$-$C_{12}$-Alkyl), CON($C_1$-$C_{12}$-Alkyl)$_2$, Cyano, Hydroxy, $C_1$-$C_{12}$-Alkyl, $C_1$-$C_{12}$-Alkoxy oder $C_1$-$C_{12}$-Alkylthio bedeuten. Bevorzugte Halogene sind Cl und Br. Die Reste $L^8$ bedeuten unabhängig voneinander Wasserstoff, Cyano, $C_1$-$C_{12}$-Alkyl, $C_1$-$C_{12}$-Alkoxy oder Halogen, wobei Cl und Br bevorzugt sind. Die aromatischen oder heteroaromatischen Ringe A, B, C, D und E können zudem benzanelliert sein, wobei sich die jeweils vorhandenen Reste $L^7$ der dann benzanellierten Ringe A, B, C auf die verbleibenden sechs Positionen verteilen. "0/⊕" beispielsweise gibt, je nachdem ob Fe(II) oder Fe(III) im Komplex vorhanden ist, die Gesamtladung an (also 0 bei Vorliegen von Fe(II), +1 ("⊕") bei Vorliegen von Fe(III)).

Beispiele solcher Fe-Verbindungen sind

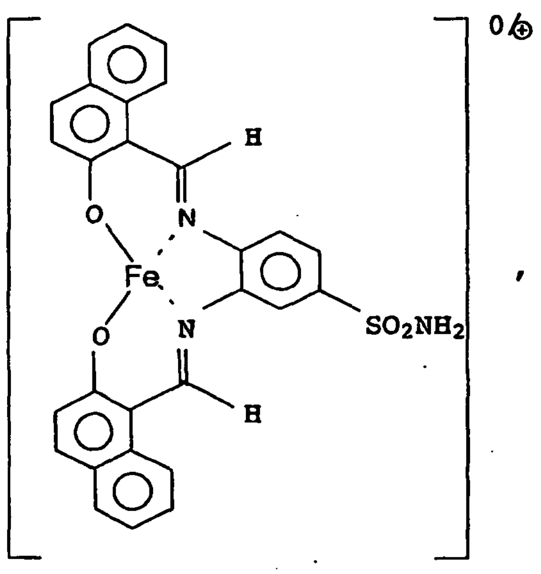

,

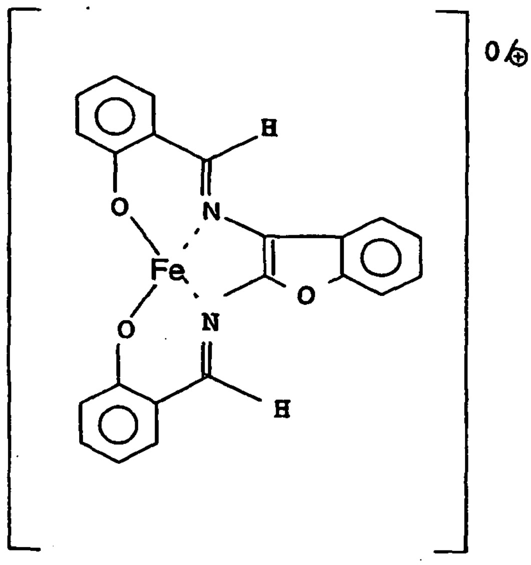

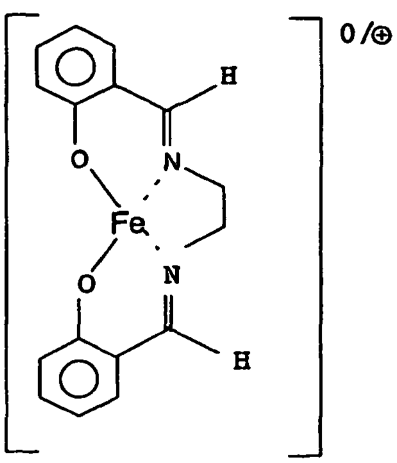

,

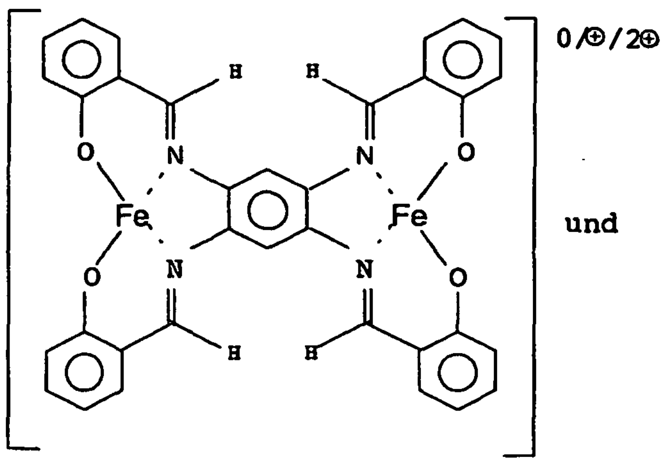

und

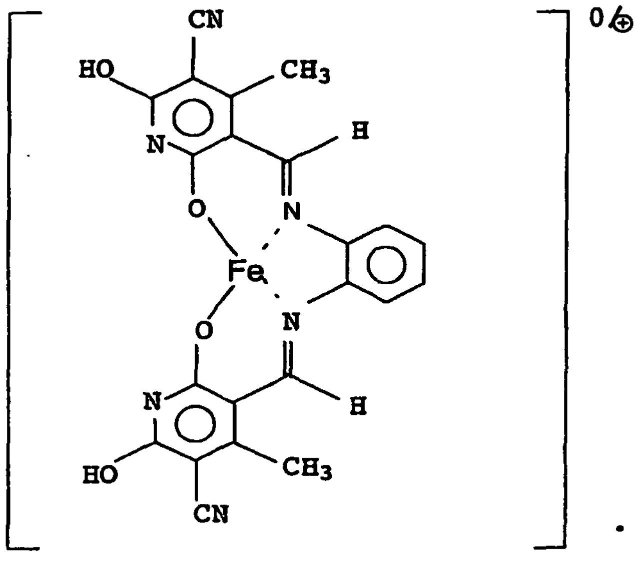

Andere verwendbare Fe-Verbindungen mit S-haltigen Liganden sind etwa

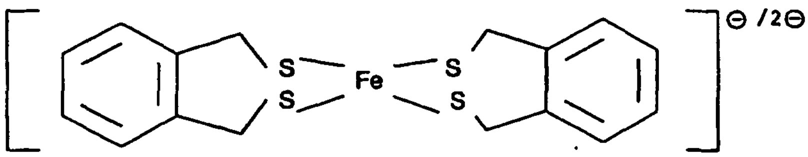

oder $[Fe_4S_4(SR)_4]^{4\ominus/3\ominus}$, aber auch Komplexe des Fe(II)/Fe(III) mit Dithiocarbonaten $R_2NCS_2^{\ominus}$ wie etwa $[Fe(S_2CNR_2)_3]^{\ominus}$ ($R=CH_3$, $C_2H_5$).

Weiter lassen sich auch Verbindungen der Gruppe d) einsetzen. Bevorzugt werden bei den Fe-Halogeniden die Fe(II)- und Fe(III)-Salze von Cl und Br, sowie die Komplexverbindungen $FeX_4^{\ominus/2\ominus}$ (X=Cl, Br) eingesetzt. Zu den erfindungsgemäß einzusetzenden Fe-Pseudohalogenid-Verbindungen zählen beispielsweise $[Fe(CN)_6]^{3\ominus}/[Fe(CN)_6]^{4\ominus}$ sowie Thiocyanatkomplexe der Reihe $[Fe(SCN)_{3-X}(H_2O)_{3+X}]^{X\oplus}$ (x = 0, 1, 2).

Als Gegenionen aller aufgeführten negativ geladenen Komplexionen finden bevorzugt $H^{\oplus}$, $Na^{\oplus}$, $K^{\oplus}$ und Ammoniumionen $NH_4^{\oplus}$ sowie $N(CH_3)_4^{\oplus}$, bei den Hexacyanoferraten aber neben $K^{\oplus}$ auch $Fe^{2\oplus}$ im Falle des $[Fe(CN)_6]^{3\ominus}$ und $Fe^{3\oplus}$ im Falle des $[Fe(CN_6)]^{4\ominus}$ Einsatz.

Bei den aufgeführten positiv geladenen Komplexionen werden bevorzugt als Gegenionen $Cl^{\ominus}$, $Br^{\ominus}$, $I^{\ominus}$, $SO_4^{2\ominus}$, $H_3CCO_2^{\ominus}$, $CrO_4^{2\ominus}$, $BF_4^{\ominus}$ sowie $B(C_6H_5)_4^{\ominus}$ eingesetzt.

Es können Mischungen von Eisenverbindungen vorliegen, in welchen die Fe-Zentren unterschiedliche Oxidationsstufen aufweisen.

Zur Aktivierung der Fe-Verbindungen kann eine Vorbehandlung mit peroxogruppenhaltigen Substanzen erfolgen. Als solche kommen z. B. in Frage $H_2O_2$, Carosche Säure und Peroxodischwefelsäure sowie deren Mono- oder Disalze mit Natrium oder Kalium, weiterhin auch organische Persäuren, wie Benzoepersäure oder substituierte Benzoepersäure aber auch Peroxoverbindungen, wie tert-Butylperoxid.

Eine weitere Aktivierung der Fe-Verbindungen besteht in deren Feinmahlung. Diese Mahlung, welche mit den üblichen Aggregaten erfolgt, kann im trockenen oder feuchten Zustand erfolgen. Gewünschtenfalls lassen sich aber auch gängige Dispergiermittel einsetzen oder beimischen. Neben den oben genannten peroxogruppenhaltigen Substanzen kann auch Sauerstoff, z. B. Luftsauerstoff, als alleiniger oder auch zusätzlicher Aktivator dienen. Dies wird bewerkstelligt durch Mahlung an Luft oder unter einer definiert eingestellten Mischung aus Sauerstoff (Luft) und einem Inertgas, wie etwa Stickstoff.

Bei Eisenverbindungen, welche in den Stoffmischungen schwer löslich sind, kann eine weitere Aktivierung

dadurch erfolgen, dass man sie in geeigneten Lösungsmitteln unter An- oder Abwesenheit der genannten Aktivatoren wie peroxogruppenhaltigen Substanzen oder Sauerstoff auf- oder auch nur anlöst und durch geeignete Maßnahmen wieder ausfällt. Solche Maßnahmen können beispielsweise sein - eventuell auch abhängig vom verwendeten Lösungsmittel-Verdünnung mit einer Flüssigkeit, in welcher die Fe-Verbindung unlöslich ist, Neutralisation mit einer Säure oder Lauge, Abkühlen der Lösung, Gefriertrocknung oder Sprühtrocknung.

Im Falle des Fe-Phthalocyanins oder des Fe-Tetraazaannulens lassen sich beispielsweise durch Behandlung mit Oleum Sulfonsäurederivate herstellen, welche zum Teil gelöst oder fein dispergiert vorliegen und durch Verdünnung mit Wasser ausgefällt werden. Die so erhaltenen, feinteiligen Suspensionen können dann, gegebenenfalls nach (partieller) Neutralisation, mit oben genannten Substanzen weiter aktiviert werden, wobei auch hier wieder die für die Herstellung der Nitroxylverbindungen einzusetzenden Ausgangsverbindungen zugegen sein können.

Die erfindungsgemäße Stabilisatorzusammensetzung enthält 1 Gew.-ppm bis 5 Gew.-%, vorzugsweise 3 Gew.-ppm bis 0,1 Gew.-%, insbesondere 5 Gew.-ppm bis 0,01 Gew.-%, Eisenverbindung B, bezogen auf die Stickstoffverbindung A.

In einer besonders bevorzugten Ausführungsform enthält die erfindungsgemäße Stabilisatorzusammensetzung zusätzlich wenigstens ein stabiles Nitroxyl-Radikal (N-Oxyl-Radikal), vorzugsweise mit einem Molekulargewicht von wenigstens 150, insbesondere wenigstens 300. Es handelt sich dabei um stabile freie Radikale, die in der Regel als Reinsubstanz herstellbar und über Jahre unzersetzt gelagert werden können. Sie leiten sich in der Regel von einem sekundären Amin ab, worin alle Substituenten in α-Stellung zum Amin-Stickstoffatom von Wasserstoff verschieden sind.

Geeignete N-Oxyle von Aminen sind z. B. die folgenden Strukturen

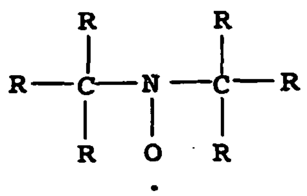

oder

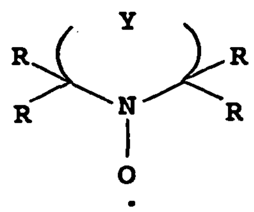

wobei R gleiche oder verschiedene Alkyl-, Cycloalkyl-, Aralkyl- oder Arylreste, die auch paarweise zu einem Ringsystem verbunden sein können, und Y eine Gruppe, die erforderlich ist, um einen 5- oder 6-gliedrigen Ring zu vervollständigen, bedeuten. Beispielsweise steht R für einen $C_1$-$C_{20}$-, insbesondere $C_1$-$C_8$-Alkylrest, einen $C_5$- oder $C_6$-Cycloalkylrest, einen Benzylrest oder einen Phenylrest. Y ist beispielsweise eine Alkylengruppe $-(CH_2)_2-$ oder $-(CH_2)_3-$.

Weiterhin kommen auch N-Oxylverbindungen wie die folgenden Strukturen in Betracht

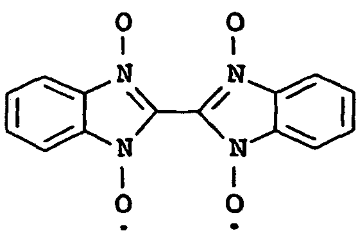

,

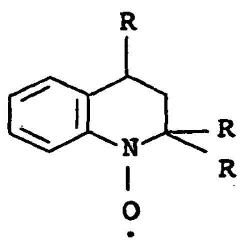

oder

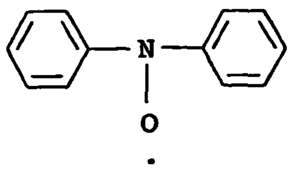

wobei die aromatischen Ringe jeweils noch 1 bis 3 inerte Substituenten tragen können, wie z. B. $C_1$-$C_4$-Alkyl, $C_1$-$C_4$-Alkoxy oder Cyano.

Vorzugsweise werden sterisch gehinderte N-Oxyle von cyclischen Aminen eingesetzt, z. B. von Piperidin- oder Pyrrolidinverbindungen, die im Ring ein weiteres Heteroatom wie Stickstoff, Sauerstoff oder Schwefel enthalten können, wobei sich dieses Heteroatom nicht in Nachbarstellung zum gehinderten Aminstickstoff befindet. Die sterische Hinderung ist durch Substituenten in beiden Nachbarstellungen zum Aminstickstoff gegeben, wobei als Substituenten Kohlenwasserstoffreste in Betracht kommen, die alle 4 Wasserstoffatome der α-$CH_2$-Gruppen ersetzen. Beispielsweise seien als Substituenten Phenyl, $C_3$-$C_6$-Cycloalkyl, Benzyl und insbesondere $C_1$-$C_6$-Alkylreste genannt, wobei die an demselben α-C-Atom gebundenen Alkylreste auch untereinander zu einem 5- oder 6-Ring verbunden sein können.

Bevorzugte Nitroxyl-Radikale weisen die allgemeine Struktur auf

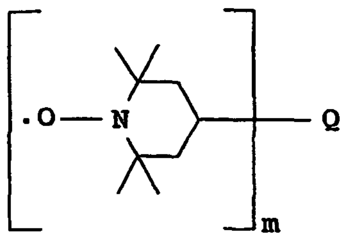

worin m und Q die bereits im Zusammenhang mit der Stickstoffverbindung A angegebene Bedeutung haben.

Verwendbare Nitroxyl-Radikale sind z. B.
1-Oxyl-2,2,6,6-tetramethylpiperidin,
1-Oxyl-2,2,6,6-tetramethylpiperidin-4-ol,
1-Oxyl-2,2,6,6-tetramethylpiperidin-4-on,
1-Oxyl-2,2,6,6-tetramethylpiperidin-4-yl-acetat,
1-Oxyl-2,2,6,6-tetramethylpiperidin-4-yl-2-ethylhexanoat,
1-Oxyl-2,2,6,6-tetramethylpiperidin-4-yl-stearat,
1-Oxyl-2,2,6,6-tetramethylpiperidin-4-yl-benzoat,
1-Oxyl-2,2,6,6-tetramethylpiperidin-4-yl(4-tert-butyl)benzoat,
Bis(1-oxyl-2,2,6,6-tetramethylpiperidin-4-yl)-succinat,
Bis(1-oxyl-2,2,6,6-tetramethylpiperidin-4-yl)-adipat,
Bis(1-oxyl-2,2,6,6-tetramethylpiperidin-4-yl)-sebacat,
Bis(1-oxyl-2,2,6,6-tetramethylpiperidin-4-yl)-n-butylmalonat,
Bis(1-oxyl-2,2,6,6-tetramethylpiperidin-4-yl)-phthalat,
Bis(1-oxyl-2,2,6,6-tetramethylpiperidin-4-yl)-isophthalat,
Bis(1-oxyl-2,2,6,6-tetramethylpiperidin-4-yl)-terephthalat,
Bis(1-oxyl-2,2,6,6-tetramethylpiperidin-4-yl)-hexahydroterephthalat,
N,N'-Bis(1-oxyl-2,2,6,6-tetramethylpiperidin-4-yl)-adipinamid,
N-(1-Oxyl-2,2,6,6-tetramethylpiperidin-4-yl)-caprolactam,
N-(1-Oxyl-2,2,6,6-tetramethylpiperidin-4-yl)dodecylsuccinimid,
2,4,6-Tris-[N-butyl-N-(1-oxyl-2,2,6,6-tetramethylpiperidin-4-yl]-s-triazin,
N,N'-Bis(1-oxyl-2,2,6,6-tetramethylpiperidin-4-yl)-N,N'-bisformyl-1,6-diaminohexan,
4,4'-Ethylenbis(1-oxyl-2,2,6,6-tetramethylpiperazin-3-on) und
Tris-(2,2,6,6-tetramethyl-1-oxyl-piperidin-4-yl)phosphit.

Falls mitverwendet, werden Nitroxyl-Radikale vorzugsweise in einer Menge von 0,01 bis 10 Gew.-%, insbesondere 0,05 bis 1 Gew.-%, bezogen auf die Stickstoffverbindung A, eingesetzt.

Die erfindungsgemäße Stabilisatorzusammensetzung kann ferner einen oder mehrere Costabilisatoren enthalten, die vorzugsweise ausgewählt sind unter

a) alkylierten Monophenolen, z. B. 2,6-Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, lineare oder in der Seitenkette verzweigte Nonylphenole, wie z. B. 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon;

b) Alkylthiomethylphenolen, z. B. 2,4-Di-octylthiomethyl-6-tert-bütylphenol, 2,4-Di-octylthiomethyl-6-methyl-phenol, 2,4-Dioctylthiomethyl-6-ethylphenol, 2,6-Di-dodecylthiomethyl-4-nonylphenol;

c) Hydrochinonen und alkylierten Hydrochinonen, z. B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis(3,5-di-tert-butyl-4-hydroxyphenyl)adipat;

d) Tocopherolen, z. b. α-Tocopherol, β-Tocopherol, γ-Tocopherol, δ-Tocopherol und Mischungen davon (Vitamin E);

e) hydroxylierten Thiodiphenylethern, z. B. 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis(6-tert-butyl-2-methylphenol), 4,4'-Thio-bis(3,6-di-sec.-amylphenol), 4,4'-Bis(2,6-dimethyl-4-hydroxyphenyl)-disulfid;

f) Alkylidenbisphenolen, z. B. 2,2'-Methylen-bis(6-tert-butyl-4-methylphenol), 2,2'-Methylen-bis(6-tert-butyl-4-ethylphenol), 2,2'-Methylen-bis[4-methyl-6-($\alpha$-methylcyclohexyl)-phenol], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis(4,6-di-tert-butylphenol), 2,2'-Ethyliden-bis(6-tert-butyl-4-isobutylphenol), 2,2'-Methylen-bis[6-(a-methylbenzyl)-4-nonylphenol], 2,2'-Methylen-bis[6-(a,a-dimethylbenzyl)-4-nonylphenol], 4,4'-Methylen-bis(2,6-di-tert-butylphenol), 4,4'-Methylen-bis(6-tert-butyl-2-methylphenol), 1,1-Bis(5-tert-butyl-4-hydroxy-2-methylphenyl)-butan, 2,6-Bis(3-tert-butyl-5-methyl-2-hydroxybenzyl)-4-methylphenol, 1,1,3-Tris(5-tert-butyl-4-hydroxy-2-methylphenyl)-butan, 1,1-Bis(5-tert-butyl-4-hydroxy-2-methyl-phenyl)-3-n-dodecylmercaptobutan, Ethylenglycol-bis[3,3-bis(3'-tert-butyl-4'-hydroxyphenyl)-butyrat], Bis(3-tert-butyl-4-hydroxy-5-methyl-phenyl)-dicyclopentadien, Bis[2-(3'-tert-butyl-2'-hydroxy-5'-methyl-benzyl)-6-tert-butyl-4-methyl-phenyl]-terephthalat, 1,1-Bis(3,5-dimethyl-2-hydroxyphenyl)-butan, 2,2-Bis(3,5-di-tert-butyl-4-hydroxyphenyl)-propan, 2,2-Bis(5-tert-butyl-4-hydroxy-2-methylphenyl)-4-n-dodecylmercaptobutan, 1,1,5,5-Tetra-(5-tert-butyl-4-hydroxy-2-methylphenyl)-pentan;

g) O-, N- und S-Benzylverbindungen, z. B. 3,5,3',5'-Tetra-tert-butyl-4,4'-dihyroxydibenzylether, Octadecyl-4-hydroxy-3,5-dimethylbenzyl-mercaptoacetat, Tridecyl-4-hydroxy-3,5-di-tert-butylbenzyl-mercaptoacetat, Tris(3,5-di-tert-butyl-4-hydroxybenzyl)-amin, Bis(4-tert-butyl-3-hydroxy-2,6-dimethylbenzyl)-dithioterephthalat, Bis(3,5-di-tert-butyl-4-hydroxybenzyl)-sulfid, Isooctyl-3,5-di-tert-butyl-4-hydroxybenzyl-mercaptoacetat;

h) hydroxybenzylierten Malonaten, z. B. Dioctadecyl-2,2-bis(3,5-di-tert-butyl-2-hydroxybenzyl)-malonat, Dioctadecyl-2-(3-tert-butyl-4-hydroxy-5-methylbenzyl)-malonat, Di-dodecylmercaptoethyl-2,2-bis(3,5-di-tert-butyl-4-hydroxybenzyl)-malonat, Di-[4(1,1,3,3-tetramethylbutyl)-phenyl]-2,2-bis(3,5-di-tert-butyl-4-hydroxybenzyl)-malonat;

i) Hydroxybenzyl-Aromaten, z. B. 1,3,5-Tris(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris(3,5-di-tert-butyl-4-hydroxybenzyl)-phenol;

j) Triazinverbindungen, z. B. 2,4-Bis-octylmercapto-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 1,3,5-Tris(3,5-di-tert-butyl-4-hydroxyphenylpropionyl)-hexahydro-1,3,5-triazin, 1,3,5-Tris(3,5-dicyclohexyl-4-hydroxybenzyl)-isocyanurat;

k) Benzylphosphonaten, z. B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzylphosphonsäure-monoethylesters;

l) Acylaminophenolen, z. B. 4-Hydroxylaurinsäureanilid, 4-Hydroxystearinsäureanilid, N-(3,5-di-tert-butyl-4-hydroxyphenyl)-carbaminsäureoctylester;

m) Estern der $\beta$-(3,5-Di-tert-butyl-4-ethoxyphenyl)propionsäure mit ein- oder mehrwertigen Alkoholen, wie z. B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan; Estern der $\beta$-(5-tert-Butyl-4-hydroxy-3-methylphenyl)propionsäure mit ein- oder mehrwertigen Alkoholen, wie z. B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentraerythrit, Tris(hydroxyethyl)-isocyanurat, N,N'-Bis(hydroxyethyl)-oxalsäurediamid, 3-Thiaundecanol, 3-thiapentadecanol, Trimethylhexandiol, Trimethylolpropan, 4-Hydroxymethyl-1-phospha-2,6,7-trioxabicyclo-[2.2.2]-octan; Estern der $\beta$-(3,5-Dicyclohexyl-4-hydroxyphenyl)propionsäure mit ein- oder mehrwertigen Alkoholen, wie z. B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan; und/oder Estern der 3,5-Di-tert-butyl-4-hydroxyphenylessigsäure mit ein- oder mehrwertigen Alkoholen, wie z. B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat,

N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan;

n) Amiden der β-(3,5-Di-tert-butyl-4-hydroxyphenyl)-propionsäure, wie z. B. N,N'-Bis(3,5-di-tert-butyl-4-hydroxyphenylpropionyl)-hexamethylendiamin, N,N'-Bis(3,5-di-tert-butyl-4-hydroxyphenylpropionyl)-trimethylendiamin, N,N'-Bis(3,5-di-tert-butyl-4-hydroxyphenylpropionyl)-hydrazin;

o) 2-(2'-Hydroxyphenyl)benzotriazolen, wie z. B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis(α,α-dimethylbenzyl)-2'-hydroxyphenyl)-benzotriazol, Mischung aus 2-(3'-tert-Butyl-2'-hydroxy-5'-(2-octyloxycarbonylethyl) phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, und 2-(3'-tert-Butyl-2'-hydroxy-5'-(2-isooctyloxycarbonylethyl) phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; $[R-CH_2CH_2-COO(CH_2)_3]_2$ mit R = 3'-tert-Butyl-4'-hydroxy-5'-2H-benzotriazol-2-yl-phenyl;

p) 2-Hydroxybenzophenonen, wie z. B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat;

q) Estern von substituierten und unsubstituierten Benzoesäuren, wie z. B. 4-tert-Butyl-phenylsalicylat, Phenylsalicylat, Octylphenyl-salicylat, Dibenzoylresorcin, Bis(4-tert-butyl-benzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester;

r) 3-Arylacrylsäureestern, wie z. B. Ethyl-α-cyano-β,β-diphenylacrylat, Isooctyl-α-cyano-β,β-diphenylacrylat, Methyl-α-methoxycarbonylcinnamat, Methyl-a-cyano-β-methyl-p-methoxy-cinnamat, Butyl-α-cyano-β-methyl-p-methoxy-cinnamat und Methylα-methoxycarbonyl-p-methoxycinnamat;

s) Oxamiden, wie z. B. 4,4'-Dioctyloxyoxanilid, 2,2'-Diethoxyoxanilid, 2,2'-Dioctyloxy-5,5'-di-tert-butoxanilid, 2,2'-Didodecyloxy-5,5'-di-tert-butoxanilid, 2-Ethoxy-2'-ethyloxanilid, N,N'-Bis(3-dimethylaminopropyl)oxamid, 2-Ethoxy-5-tert-butyl-2'-ethoxanilid und dessen Mischung mit 2-Ethoxy-2'-ethyl-5,4'-di-tert-butoxanilid sowie Mischungen von ortho-, para-Methoxy-disubstituerten Oxaniliden und Mischungen von ortho- und para-Ethoxy-disubstituierten Oxaniliden;

t) Phosphiten und Phosphoniten, wie z. B. Triphenylphosphit, Diphenylalkylphosphite, Phenyldialkylphosphite, Tris (nonylphenyl)-phosphit, Trilaurylphosphit, Trioctadecylphosphit, Distearyl-pentaerythritdiphosphit, Tris(2,4-di-tert-butylphenyl)-phosphit, Diisodecylpentaerythrit-diphosphit, Bis(2,4-di-tert-butylphenyl)-pentaerythritdiphosphit, Bis (2,6-di-tert-butyl-4-methylphenyl)-pentaerythritdiphosphit, Bis-isodecyloxy-pentaerythritdiphosphit, Bis(2,4-di-tert-butyl-6-methylphenyl)-pentaerythritdiphosphit, Bis(2,4,6,-tri-tert-butylphenyl)-pentaerythritdiphosphit, Tri-stearyl-sorbit-triphosphit, Tetrakis(2,4-di-tert-butylphenyl)-4,4'-biphenylen-diphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz-[d,g]-1,3,2-dioxaphosphocin, Bis(2,4,-di-tert-butyl-6-methylphenyl)-methylphosphit, Bis(2,4-di-tert-butyl-6-methylphenyl)-ethylphosphit;

u) Metalldesaktivatoren, wie z. B. N,N'-Diphenyloxalsäurediamid, N-Salicylal-N'-salicyloylhydrazin, N,N'-Bis(salicyloyl)-hydräzin, N,N'-Bis(3,5-di-tert-butyl-4-hydroxyphenylpropionyl)-hydrazin, 3-Salicyloylamino-1,2,4-triazol, Bis (benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäure-dihydrazid;

v) Hydroxylaminen, wie z. B. N,N-Dibenzylhydroxylamin, N,N-Diethylhydroxylamin, N,N-Dioctylhydroxylamin, N,N-Dilaurylhydroxylamin, N,N-Ditetradecylhydroxylamin, N,N-Dihexadecylhydroxylamin, N,N-Dioctadecylhydroxylamin, N-Hexadecyl-N-Octadecylhydroxylamin, N-Heptadecyl-N-octadecylhydroxylamin, N,N-Dialkylhydroxylamin aus hydrierten Talgfettaminen.

Die erfindungsgemäße Stabilisatorzusammensetzung eignet sich zum Stabilisieren von unbelebtem organischen Material gegen thermischen, oxidativen oder lichtinduzierten Abbau. Unter unbelebtem organischen Material sind beispielsweise kosmetische Präparate, wie Salben und Lotionen, Arzneimittelformulierungen, wie Pillen und Zäpfchen, photographische Aufzeichnungsmaterialien, insbesondere photographische Emulsionen, Vorprodukte für Kunststoffe und Anstrichmittel, insbesondere jedoch Anstrichmittel und Kunststoffe, wie synthetische Polymere, selbst, zu verstehen. Beispiele für derartige Materialien sind:

1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen, wie z. B. von Cyclopenten oder Norbornen; ferner Polyethylen (das gegebenenfalls vernetzt sein kann), z. B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE).
Polyolefine, d. h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere radikalisch oder mittels Katalysator, wobei der Katalysator gewöhnlich ein oder mehrere Metalle der Gruppe IVb, Vb, VIb oder VIII enthält. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.

2. Mischungen der unter 1. genannten Polymeren, z. B. Mischungen von Polypropylen mit Polyisobutylen, Polypropylen mit Polyethylen (z. B. PP/HDPE, PP/LDPE) und Mischungen verschiedener Polyethylentypen (z. B. LDPE/HDPE).

3. Copolymere von Mono- und Diolefinen untereinander oder mit anderen Vinylmonomeren, wie z. B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexandien, Dicyclopentadien oder Ethylidennorbornen; ferner Mischungen solcher Copolymere untereinander und mit unter 1. genannten Polymeren, z. B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren, wie z. B. Polyamiden.

4. Kohlenwasserstoffharze, inklusive hydrierte Modifikationen davon (z. B. Klebrigmacherharze) und Mischungen von Polyalkylenen und Stärke.

5. Polystyrol, Poly-(p-methylstyrol), Poly-($\alpha$-methylstyrol).

6. Copolymere von Styrol oder $\alpha$-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

7. Pfropfcopolymere von Styrol oder $\alpha$-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6. genannten Copolymeren, wie sie z. B. als sogenannte ABS-, MBS-, ASA- oder AES-Polymere bekannt sind.

8. Halogenhaltige Polymere, wie z. B. Polychloropren, Chlorkautschuk, chloriertes und bromiertes Copolymer aus

Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z. B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.

9. Polymere, die sich von $\alpha,\beta$-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.

10. Copolymere der unter 9. genannten Monomeren untereinander oder mit anderen ungesättigten Monomeren, wie z. B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.

11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.

12. Homo- und Copolymere von cyclischen Ethern, wie Polyalkylenglykole, Polyethylenoxyd, Polypropylenoxyd, oder deren Copolymere mit Bisglycidylethern.

13. Polyacetale, wie Polyoxymethylen, sowie solche Polyoxymethylene, die Comonomere, wie z. B. Ethylenoxid, enthalten; Polyacetale, die mit thermoplastischen Polyurethanen, Acrylaten oder MBS modifiziert sind.

14. Polyphenylenoxide und -sulfide und deren Mischungen mit Styrolpolymeren oder Polyamiden.

15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.

16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z. B. Poly-2,4,4-trimethylhexamethylenterephthalamid oder Poly-m-phenylen-isophthalamid. Block-Copolymere der vorstehend genannten Polyamide mit Polyolefinen, Olefin-Copolymeren, Ionomeren oder chemisch gebundenen oder gepfropften Elastomeren; oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

17. Polyharnstoffe, Polyimide, Polyamidimide, Polyetherimide, Polyesterimide, Polyhydantoine und Polybenzimidazole.

18. Polyester, die sich von Dicarbonsäuren und Dialkoholen und/ oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

19. Polycarbonate und Polyestercarbonate.

20. Polysulfone, Polyethersulfone und Polyetherketone.

21. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.

22. Trocknende und nicht-trocknende Alkydharze.

23. Ungesättigte Polyesterharze, die sich von Copolyestern gesättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.

24. Vernetzbare Acrylharze, die sich von substituierten Acrylsäureestern ableiten, wie z. B. von Epoxyacrylaten, Urethanacrylaten oder Polyesteracrylaten.

25. Alkydharze, Polyesterharze und Acrylatharze, die mit Melaminharzen, Harnstoffharzen, Isocyanaten, Isocyanuraten, Polyisocyanaten oder Epoxidharzen vernetzt sind.

26. Vernetzte Epoxidharze, die sich von aliphatischen, cycloaliphatischen, heterocyclischen oder aromatischen Glycidylverbindungen ableiten, z. B. Produkte von Bisphenol-A-diglycidylethern, Bisphenol-F-diglycidylethern, die mittels üblichen Härtern, wie z. B. Anhydriden oder Aminen mit oder ohne Beschleunigern vernetzt werden.

27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.

28. Mischungen (Polyblends) der vorgenannten Polymeren, wie z. B. PP/EPDM, Polyamid/EPDM oder ABS, PVC/EVA, PVC/ABS, PVC/MBS, PC/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.

29. Natürliche und synthetische organische Stoffe, die reine monomere Verbindungen oder Mischungen von solchen darstellen, beispielsweise Mineralöle, tierische oder pflanzliche Fette, Öle und Wachse, oder Öle, Wachse und Fette auf Basis synthetischer Ester mit Mineralölen in beliebigen Gewichtsverhältnissen, wie sie z. B. als Spinnpräparationen Anwendung finden, sowie deren wässrige Emulsionen.

30. Wässrige Emulsionen natürlicher oder synthetischer Kautschuke, wie z. B. Naturkautschuk-Latex oder Latices von carboxylierten Styrol-Butadien-Copolymeren.

Die erfindungsgemäße Stabilisatorzusammensetzung eignet sich insbesondere zur Stabilisierung von synthetischen Polymeren, vorzugsweise Polyolefinen und Homo- und Copolymerisaten von Styrol.

Die erfindungsgemäße Stabilisatorzusammensetzung wird dem zu stabilisierenden organischen Material in der Regel in einer Konzentration von 0,005 bis 5 Gew.-%, vorzugsweise von 0,01 bis 2 Gew.-%, insbesondere von 0,05 bis 1 Gew.-%, bezogen auf das organische Material vor, während oder nach seiner Herstellung zugesetzt.

Die erfindungsgemäße Stabilisatorzusammensetzung kann auch in Form eines Masterbatches, der diese beispielsweise in einer Konzentration von 2,5 bis 25 Gew.-% z. B. in einer Polymermatrix enthält, hergestellt und den zu stabilisierenden Materialien zugesetzt werden.

Die Erfindung wird durch die folgenden Beispiele näher erläutert.

Beispiel 1

Es wurde eine Stabilisatorzusammensetzung hergestellt durch Vermischen eines alternierenden N-(2,2,6,6-Tetramethyl-4-piperidinyl)maleinsäureimid-$C_{20}$-$C_{24}$-$\alpha$-Olefin-Copolymerisats mit einem mittleren Molekulargewicht von 2 500 mit 0,1 % Eisen-Dibenzo[b,i]-1,4,8,11-tetraaza-[14]annulen.

Polyethylen (Lupolen 1840 D) und 0,1 Gew.-% der Stabilisatorzusammensetzung wurden in einem Intensivmischer bei 180 °C gemischt und dann über einen Laborextruder bei einer Temperatur von 180 °C homogenisiert und granuliert. Aus dem erhaltenen Granulat wurde in einer Folienblasanlage eine Folie in einer Dicke von 70 $\mu$m hergestellt. Die Folie wurde in einem Schnellbewitterungsgerät vom Typ Xenotest 1200 nach DIN 53387 bewittert. Anschließend wurde die Dehnung gemäß EN ISO 527-1 nach 0, 504, 1008 und 1512 Stunden Bewitterung im Xenotest 1200 bestimmt. Die Dehnung ist ein Maß für die Alterung der Folie. Mit sinkender Dehnung verliert die Folie an Qualität. Die Ergebnisse sind in Tabelle 1 zusammengefasst.

Es wurde ferner der CO-Wert (Carbonyl-Wert) nach 0, 168, 336 und 504 Stunden Bewitterung bestimmt. Der CO-Wert ist ein Maß für die Konzentration an Carbonylgruppen, die durch Photooxidation unter Bewitterungsbedingungen gebildet werden. Der CO-Wert ist eine von der Dicke der Prüffolie unabhängige Größe, bei der die IR-Extinktion des CO-Bandenmaximums bei 1 715 $cm^{-1}$ (entsprechend 5,83 $\mu$m) im Verhältnis zu Extinktion einer alterungsunabhängigen benachbarten Bande des Polymeren ausgedrückt wird. Für Polyethylen gilt folgende Definition:

$$[CO] = E5{,}83\ \mu m / E4{,}97\ \mu m$$

Die Ergebnisse sind in Tabelle 2 zusammengefasst.

Beispiel 2

Beispiel 1 wurde wiederholt, wobei jedoch 0,01 Gew.-% Eisenverbindung verwendet wurden.
Die Ergebnisse sind in den Tabellen 1 und 2 zusammengefasst.

Beispiel 3

Beispiel 1 wurde wiederholt, wobei jedoch zur Herstellung der Stabilisatorzusammensetzung 1 ppm Eisenverbindung und zusätzlich 0,1 Gew.-% N,N'-Bis(1-Oxyl-2,2,6,6-tetramethylpiperidin-4-yl)-N,N'-bisformyl-1,6-diaminohexan (Nitroxylradikal) verwendet wurden.
Die Ergebnisse sind in den Tabellen 1 und 2 zusammengefasst.

Beispiel 4

Beispiel 3 wurde wiederholt, wobei jedoch 5 ppm Eisenverbindung und 0,5 Gew.-% Nitroxylradikal verwendet wurden.
Die Ergebnisse sind in den Tabellen 1 und 2 zusammengefasst.

Beispiel 5 (Vergleichsbeispiel)

Beispiel 1 wurde wiederholt, wobei jedoch keine Eisenverbindung verwendet wurde.
Die Ergebnisse sind in den Tabellen 1 und 2 zusammengefasst.

Beispiel 6 (Kontrolle)

Beispiel 1 wurde wiederholt, wobei jedoch überhaupt keine Stabilisatorzusammensetzung verwendet wurde.
Die Ergebnisse sind in den Tabellen 1 und 2 zusammengefasst.

Tabelle 1: Dehnung von PE-Folien nach Bewitterung

| Beispiel Nr. | 0 h | 504 h | 1008 h | 1512 h |
|---|---|---|---|---|
| 1 | 368,5 | 366,8 | 257,4 | 53,0 |
| 2 | 340,6 | 343,9 | 270,3 | 36,6 |
| 3 | 364,9 | 366,2 | 308,5 | 58,4 |
| 4 | 367,1 | 355,4 | 294,5 | 66,3 |
| 5 (Vergleich) | 358,7 | 320,6 | 253,3 | 36,2 |
| 6 (Kontrolle) | 371,4 | 320,0 | 212,1 | 24,1 |

Tabelle 2: CO-Wert von PE-Folien nach Bewitterung

| Beispiel Nr. | 0 h | 168 h | 336 h | 504 h |
|---|---|---|---|---|
| 1 | 0,265 | 0,66 | 0,68 | 1,58 |
| 2 | 0,300 | 0,70 | 0,47 | 1,47 |
| 3 | 0,333 | 0,61 | 0,57 | 1,41 |
| 4 | 0,367 | 0,73 | 0,48 | 1,39 |

(fortgesetzt)

| Beispiel Nr. | 0 h | 168 h | 336 h | 504 h |
|---|---|---|---|---|
| 5 (Vergleich) | 0,387 | 0,72 | 0,51 | 1,45 |
| 6 (Kontrolle) | 0,111 | 0,82 | 0,74 | 0,94 |

## Patentansprüche

**1.** Stabilisatorzüsammensetzung, enthaltend

A) wenigstens eine Stickstoffverbindung der allgemeinen Formel

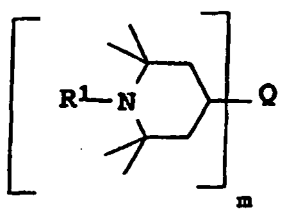

worin

$R^1$ für H, $C_1$-$C_8$-Alkyl, $CH_2CN$, OH, $C_1$-$C_8$-Alkoxy, $C_3$-$C_6$-Alkonyl oder $C_1$-$C_8$-Acyl steht,
Q für einen m-wertigen, über O, N oder C gebundenen organischen Rest mit einem Molekulargewicht von ≥ 15 steht und
m für eine ganze Zahl von 1 bis 100 steht; und

B) wenigstens eine Eisenverbindung in einer Menge von 1 Cew.-ppm bis 5 Gew.-%, bezogen auf die Stickstoffverbindung.

**2.** Zusammensetzung nach Anspruch 1, **dadurch gekennzeichnet, dass** Q ausgewählt ist unter -O($C_1$-$C_4$-Alkyl),

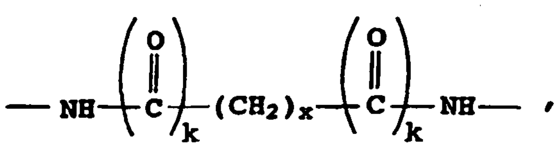

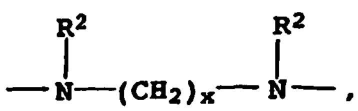

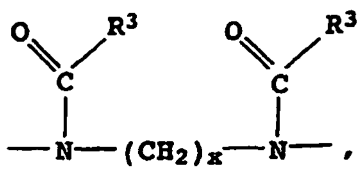

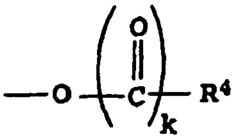,

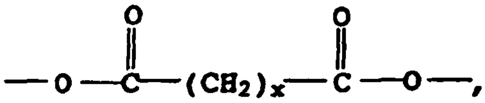,

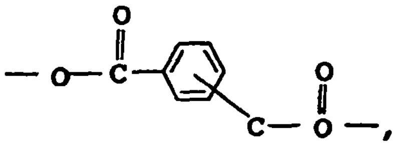,

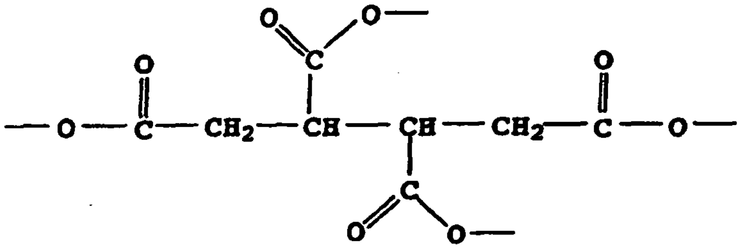,

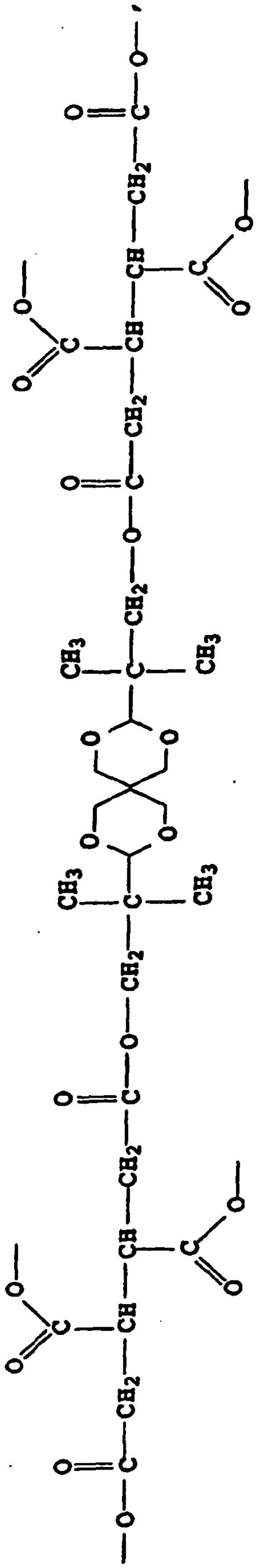

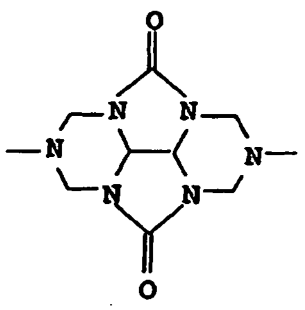
,

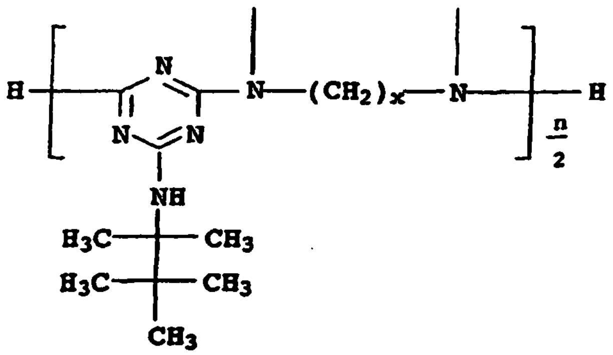
,

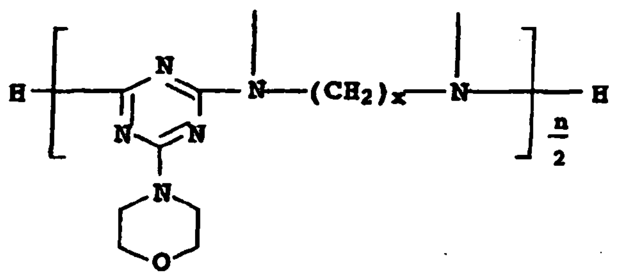
,

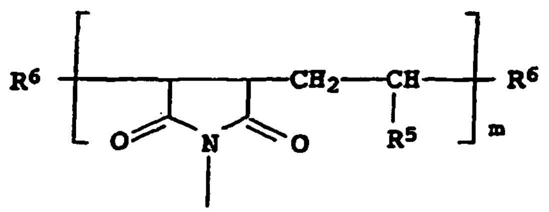
,

wobei

$R^2$ $C_1$-$C_{12}$-Alkyl oder -$(CH_2)_z$-$COOR^7$
$R^3$ Wasserstoff oder $C_1$-$C_{18}$-Alkyl,
$R^4$ $C_1$-$C_{18}$-Alkyl, Vinyl, Isopropenyl oder Phenyl, das einen, zwei oder drei unter $C_1$-$C_4$-Alkyl ausgewählte Substituen- ten tragen kann,
$R^5$ $C_8$-$C_{22}$-Alkyl,
$R^6$ Wasserstoff oder den Rest eines radikalischen Polymerisa- tionsinitiators,
$R^7$ $C_1$-$C_{18}$-Alkyl,
k 0 oder 1,
x,z unabhängig voneinander 1 bis 12 und
n eine gerade Zahl m

bedeuten.

**3.** Zusammensetzung nach einem der vorhergehenden Ansprüche, **dadurch gekennzeichnet, dass** die Eisenverbindung ausgewählt ist unter

a) metallorganischen Eisencarbonylverbindungen,
b) unsubstituierten und substituierten Ferrocen-verbindungen
c) Eisenkomplexe mit Liganden, in welchen das Eisenatom über Sauerstoff, Stickstoff, Schwefel und/oder Phosphor koordinativ gebunden ist,
d) Bisenhalogenid- und Eisenpseudohalogenid-Verbindungen.

**4.** Zusammensetzung nach einem der vorherigen Ansprüche, zusätzlich enthaltend wenigstens ein stabiles Nitroxyl-Radikal.

**5.** Zusammensetzung nach Anspruch 4, **dadurch gekennzeichnet, dass** sie 0,01 bis 10 Gew.-% Nitroxyl-Radikal, bezogen auf die Stickstoffverbindung, enthält.

**6.** Verwendung der Stabilisatorzusammensetzung enthaltend

A) wenigstens eine Stickstoffverbindung mit einem Molekulargewicht von wenigstens 150, ausgewählt unter einem sekundären Amin, worin alle Substituenten in $\alpha$-Position zum Amin-Stickstoffatom von Wasserstoff verschieden sind, oder einem von dem sekundären Amin abgeleiteten tertiären Amin, Hydroxylamin, Alkoxylamin oder Amid; und
B) wenigstens eine Eisenverbindung,

zur Stabilisierung von unbelebtem organischen Material gegen die Einwirkung von Licht, Wärme oder Sauerstoff.

**7.** Verwendung nach Anspruch 6, wobei das organische Material ein synthetisches Polymeres, insbesondere ein Polyolefin oder ein Homo- oder Copolymer von Styrol, umfasst.

**8.** Thermoplastische Formmasse, umfassend wenigstens ein synthetisches Polymeres und eine wirksame Menge einer Stabilisatorzusammensetzung nach einem der Ansprüche 1 bis 5.

## Claims

**1.** A stabilizer composition comprising:

A) at least one nitrogen compound of the formula

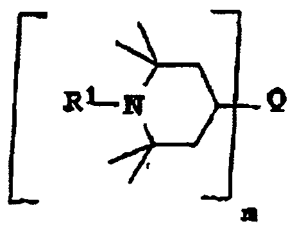

where

$R^1$ is H, $C_1$-$C_8$-alkyl, $CH_2CN$, OH, $C_1$-$C_8$-alkoxy, $C_3$- $C_6$-alkenyl or $C_1$-$C_8$-acyl,
Q is an m-valent organic radical attached via O, N or C and having a molecular weight of $\geq$ 15, and
m is an integer from 1 to 100; and

B) at least one iron compound in an amount of from 1 ppm by weight to 5% by weight, based on said nitrogen compound.

**2.** The composition according to claim 1, wherein Q is selected from -O($C_1$-$C_4$-alkyl),

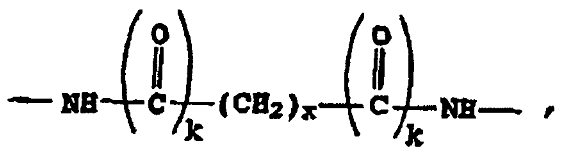

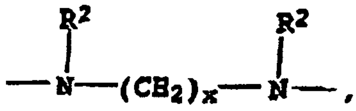

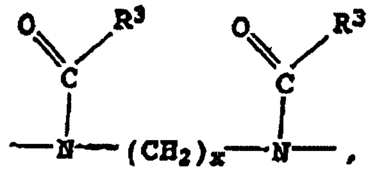

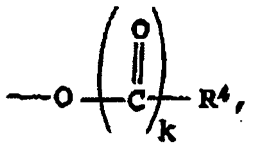

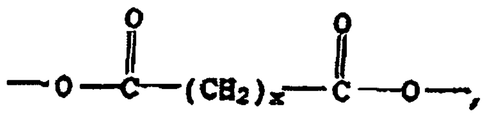

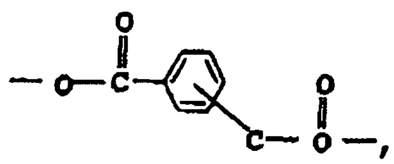

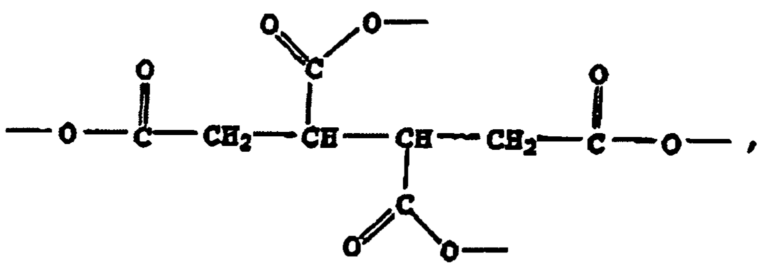

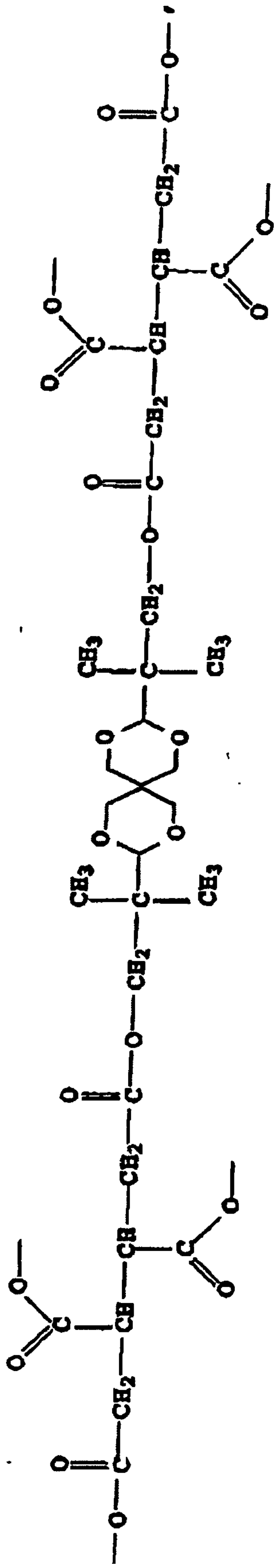

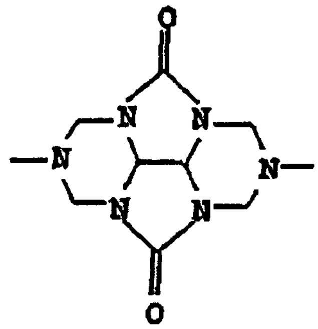

,

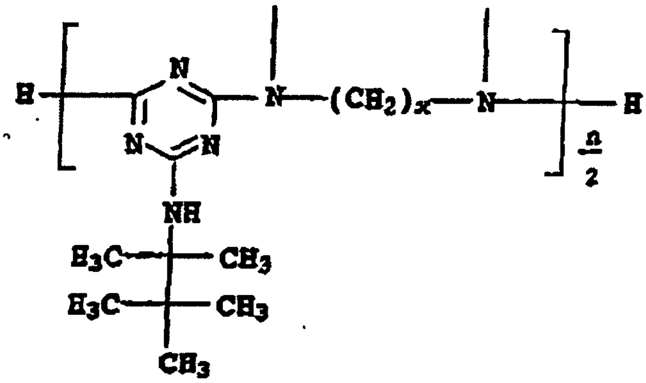

,

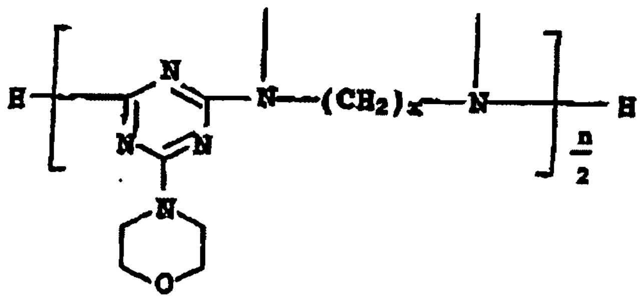

,

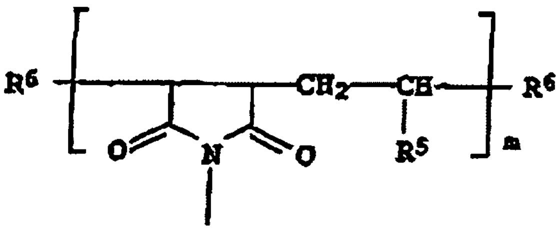

,

where

$R^2$ is $C_1$-$C_{12}$-alkyl or $-(CH_2)_z$-$COOR^7$
$R^3$ is hydrogen or $C_1$-$C_{18}$-alkyl,
$R^4$ is $C_1$-$C_{18}$-alkyl, vinyl, isopropenyl or phenyl, which may carry one, two or three substituents selected from $C_1$-$C_4$-alkyl,
$R^5$ is $C_8$-$C_{22}$-alkyl,

$R^6$ is hydrogen or the residue of a free-radical polymerization initiator,
$R^7$ is $C_1$-$C_{18}$-alkyl,
k is 0 or 1,
x and z independently of one another are from 1 to 12, and
n is an even number m.

3. The composition according to any of the preceding claims, wherein said iron compound is selected from

a) organometallic iron carbonyl compounds,
b) unsubstituted and substituted ferrocene compounds,
c) iron complexes with ligands in which the iron atom is bonded coordinatively by way of oxygen, nitrogen, sulfur and/or phosphorus,
d) iron halide and iron pseudohalide compounds.

4. The composition according to any of the preceding claims, further comprising at least one stable nitroxyl radical.

5. The composition according to claim 4, comprising from 0.01 to 10% by weight of nitroxyl radical, based on said nitrogen compound.

6. The use of the stabilizer composition comprising

A) at least one nitrogen compound having a molecular weight of at least 150, selected from a secondary amine in which all substituents positioned $\alpha$ to the amine nitrogen atom are different than hydrogen, or, derived from the secondary amine, a tertiary amine, hydroxylamine, alkoxyamine or amide; and
B) at least one iron compound,

to stabilize nonliving organic material against the effects of light, heat or oxygen.

7. The use according to claim 6, wherein said organic material comprises a synthetic polymer, especially a polyolefin or a homopolymer or copolymer of styrene.

8. A thermoplastic molding compound comprising at least one synthetic polymer and an effective amount of a stabilizer composition according to any of claims 1 to 5.

## Revendications

1. Composition stabilisatrice, contenant

A) au moins un composé d'azote de formule générale

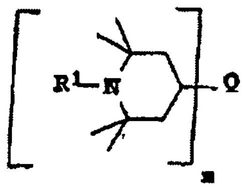

dans laquelle

$R^1$ représente H, un alkyle en $C_1$-$C_8$, $CH_2CN$, OH, un alcoxy en $C_1$-$C_8$, un alcényle en $C_3$-$C_6$ ou un acyle en $C_1$-$C_8$,
Q représente un radical organique m-valent, relié par O, N ou C, d'un poids moléculaire supérieur ou égal à 15 et
m représente un nombre entier de 1 à 100 ; et

B) au moins un composé de fer en une quantité de 1 ppm en poids à 5 % en poids, par rapport au composé d'azote.

2. Composition selon la revendication 1, **caractérisée en ce que** Q est choisi parmi -O($C_1$-$C_4$-alkyl),

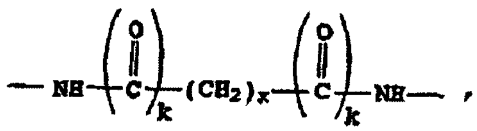

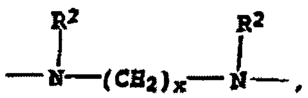

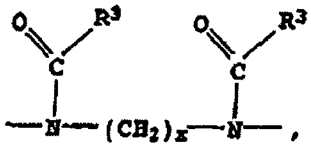

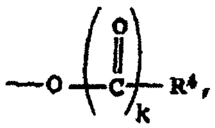

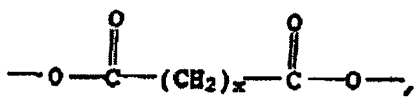

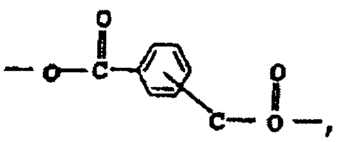

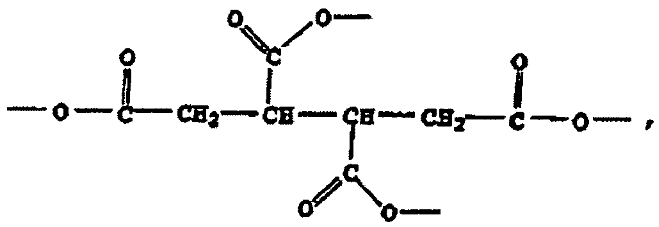

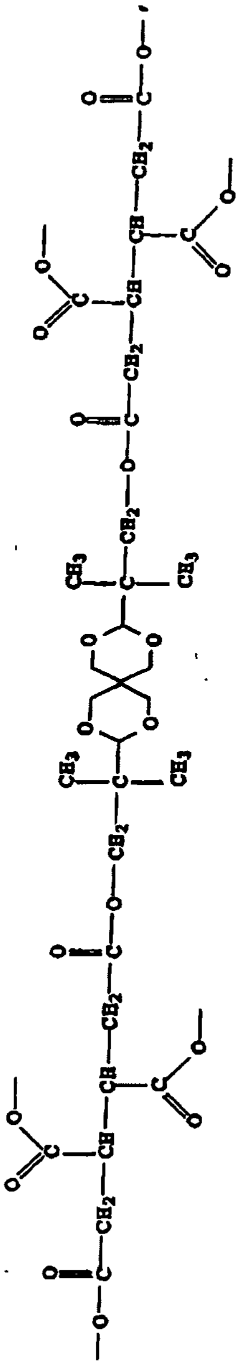

,

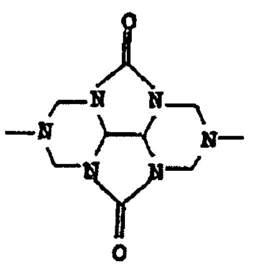

,

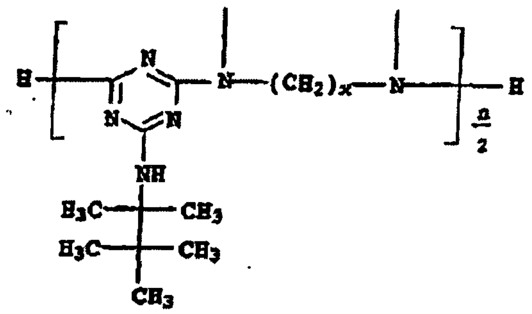

,

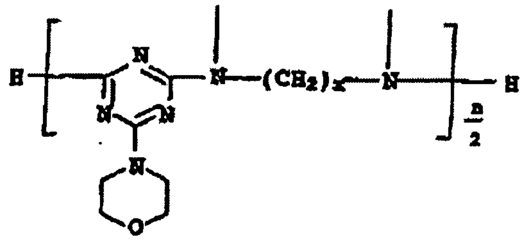

,

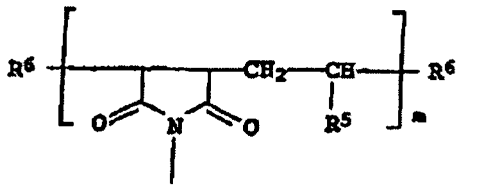

,

dans lesquelles

$R^2$ représente un alkyle en $C_1$-$C_{12}$ ou -$(CH_2)_z$-$COOR^7$,
$R^3$ représente l'hydrogène ou un alkyle en $C_1$-$C_{18}$,
$R^4$ représente un alkyle en $C_1$-$C_{18}$, un vinyle, un isopropényle ou un phényle, qui peut porter un, deux ou trois substituants choisis parmi les alkyles en $C_1$-$C_4$,
$R^5$ représente un alkyle en $C_8$-$C_{22}$,
$R^6$ représente l'hydrogène ou le radical d'un initiateur de polymérisation radicalaire,
$R^7$ représente un alkyle en $C_1$-$C_{18}$,
k représente 0 ou 1,
x, z représentent indépendamment l'un de l'autre 1 à 12, et
n représente un nombre pair m.

3. Composition selon l'une quelconque des revendications précédentes, **caractérisée en ce que** le composé de fer est choisi parmi

a) les composés carbonyles de fer métallo-organiques,
b) les composés de ferrocène non substitués et substitués,
c) les complexes de fer avec des ligands, dans lesquels l'atome de fer est relié par coordination au niveau d'un oxygène, d'un azote, d'un soufre et/ou d'un phosphore,
d) les composés d'halogénure de fer et de pseudohalogénure de fer.

4. Composition selon l'une quelconque des revendications précédentes, contenant également au moins un radical nitroxyle stable.

**5.** Composition selon la revendication 4, **caractérisée en ce qu'**elle contient 0,01 à 10 % en poids de radical nitroxyle, par rapport au composé d'azote.

**6.** Utilisation de la composition stabilisatrice contenant

A) au moins un composé d'azote d'un poids moléculaire d'au moins 150, choisi parmi une amine secondaire, tous les substituants en position $\alpha$ par rapport à l'atome d'azote de l'amine étant différents de l'hydrogène, ou une amine tertiaire, une hydroxylamine, une alcoxylamine ou un amide dérivés de l'amine secondaire ; et
B) au moins un composé de fer

pour la stabilisation d'un matériau organique non vivant envers l'action de la lumière, de la chaleur ou de l'oxygène.

**7.** Utilisation selon la revendication 6, dans laquelle le matériau organique comprend un polymère synthétique, notamment une polyoléfine ou un homo- ou copolymère de styrène.

**8.** Matériau de moulage thermoplastique, comprenant au moins un polymère synthétique et une quantité efficace d'une composition stabilisatrice selon l'une quelconque des revendications 1 à 5.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0723990 A
- DE OS4404144 A
- DE OS3738736 A
- US 3760005 A


### In der Beschreibung aufgeführte Nicht-Patentliteratur


- **C.J. Pedersen ; H.K. Frensdorff.** Makrocyclische Polyether und ihre Komplexe. *Angew. Chem.,* 1972, vol. 84 (1), 16-26
- **G. Gokel.** Crown Ethers & Cryptands. Roy. Soc. Chem., Black Bear Press, 1991
- **D.J. Cram.** Präorganisation - von Solventien zu Sphäranden. *Angew. Chem.,* 1986, vol. 98, 1041-1060
- **G.W. Gokel ; S.H. Korzeniowski.** Macrocyclic Polyether Synthesis. Springer Verlag, 1982, 55-151
- **B. Mennier.** *Chem. Rev.,* 1992, vol. 92 (8), 1411-1456